# EUROPÄISCHE PATENTSCHRIFT

(11) **EP 2 099 838 B1**
(45) Veröffentlichungstag und Bekanntmachung des Hinweises auf die Patenterteilung: **14.06.2017**
(21) Anmeldenummer: 07847585.2
(22) Anmeldetag: 30.11.2007
(51) Int. Cl.: C08G 18/02, C08G 18/72

(54) **VERFAHREN ZUR HERSTELLUNG VON POLYISOCYANATEN**
METHOD FOR PRODUCING POLYISOCYANATES
PROCÉDÉ DE PRODUCTION DE POLYISOCYANATES

(30) Priorität: 04.12.2006 EP 06125323
(43) Veröffentlichungstag der Anmeldung: 16.09.2009
(73) Patentinhaber: BASF SE, 67056 Ludwigshafen am Rhein (DE)
(72) Erfinder: BINDER, Horst, 68623 Lampertheim (DE); GRAF, Hubert, 67487 St. Martin (DE)
(74) Vertreter: BASF IP Association
(86) Internationale Anmeldenummer: PCT/EP2007/063069
(87) Internationale Veröffentlichungsnummer: WO 2008/068198

(56) Entgegenhaltungen:
- EP-A- 1 174 428
- JP-A- 2 110 123

## Beschreibung

Die vorliegende Erfindung betrifft ein Verfahren zur Herstellung von Polyisocyanaten durch Oligomerisierung von Isocyanaten.

Die Herstellung von Polyisocyanaten durch katalytische Oligomerisierung von Isocyanaten ist bereits seit langem bekannt. Für diese Reaktionen sind eine Vielzahl von Katalysatoren entwickelt worden. Häufig werden als Trimerisierungskatalysatoren Tetrasubstituierte Ammonium- oder Phosphoniumverbindungen mit Hydroxiden, Carboxylaten oder Carbonaten als Gegenionen, oder Siliciumverbindungen eingesetzt.

Bei der katalytischen Oligomerisierung von Isocyanaten muß nach der Einstellung eines bestimmten NCO-Gehaltes die Reaktion gestoppt werden, um einen unkontrollierten Molmassenaufbau und damit einen Viskositätsanstieg zu vermeiden. Dazu wird der eingesetzte Katalysator in geeigneter Weise desaktiviert, beispielsweise durch thermische Desaktivierung ("Thermisches Stoppen"), Abdestillieren des Katalysators, Extrahieren mit geeigneten Lösungsmitteln, Anbindung an Absorber oder durch Zugabe von sogenannten Katalysatorgiften, die die Aktivität des Katalysators verringern.

EP 809663 A (US 7022874) beschreibt die Verwendung von Harnstoff und Harnstoffen zur Stabilisierung von biuretgruppenhaltigen Polyisocyanat.

Dabei handelt es sich jedoch um eine Stabilisierung und nicht um den Abbruch einer Oligomerisierungsreaktion.

So beschreibt DE 2806731 den Abbruch von Trimerisierungsreaktionen durch Zugabe von Säurechloriden, wie beispielsweise Benzoylchlorid.

US 4960848 verwendet für den Reaktionsabbruch organische Säuren, wie Sulfonsäuren oder Phosphorsäureester.

Diese Verbindungen deaktivieren zwar die Oligomerisierung im allgemeinen sehr effektiv, die Reaktionskomponenten weisen aber auch unerwünschte Eigenschaften, wie Erhöhung des Chloridgehaltes oder Phosphorgehaltes auf. Zudem können die im Reaktionsgemisch verbleibenden Reaktionsprodukte oder Metaboliten der Katalysatoren dort zu unerwünschten Reaktionen führen, die häufig die Stabilität während der Lagerung beeinträchtigen, beispielsweise durch Ansteigen von Viskosität, Farbzahl, Monomerengehalt etc.

Auch bei einer thermischen Stoppung, die naturgemäß bei höheren Temperaturen als die Trimerisierungstemperatur erfolgt, zeigt sich, daß in der Regel durch die Erhöhung der Temperatur sich die Produktqualität, besonders die Farbwerte oder Viskosität des Endproduktes, deutlich verschlechtern.

JP 2-110123 A offenbart die Verwendung von Verbindungen mit Sulfinamid- oder Carbonsäureamidgruppen als Katalysatorgift zur Stoppung der Cyclotrimerisierungsreaktion von aliphatischen oder alicyclischen Isocyanaten. Als Beispiele für Carbonsäureamidgruppierungen sind auch Carbamat- und Harnstoffgruppierungen angeführt.

Explizit erwähnt sind Harnstoff und Harnstoffderivate, wie Methylharnstoff und Dimethylharnstoff, Thioharnstoff und Thioharnstoffderivate, wie Methylthioharnstoff und Dimethylthioharnstoff, und Carbamate, wie Phenyl carbamat, Ethyl carbamat and Butyl carbamat.

Die Aufgabe der vorliegenden Erfindung bestand darin, ein weiteres Verfahren zum Abstoppen einer Oligomerisierungsreaktion von Isocyanaten zu entwickeln, mit dem lagerstabile Produkte erhalten werden, die nach der Herstellung einen geringeren Anstieg von Viskosität und/oder Farbzahl zeigen.

Die Aufgabe wurde gelöst durch ein Verfahren zur Herstellung von Polyisocyanaten (P) durch katalytische Oligmerisierung von Isocyanaten (D), umfassend die Schritte
a) Umsetzen mindestens eines Isocyanats (D) in Gegenwart mindestens einer die Umsetzung des Isocyanats zum gewünschten Polyisocyanat katalysierenden Verbindung (K) unter geeigneten Reaktionsbedingungen gegebenenfalls in Gegenwart mindestens eines Alkohols (A) und gegebenenfalls mindestens eines Lösungsmittels (L),
b) bei Erreichen des gewünschten Umsatzes im Schritt a) Zugeben mindestens einer Verbindung (S) in das Reaktionsgemisch, die den Katalysator (K) in Schritt a) zu desaktivieren vermag, und
c) Abtrennen des unumgesetzten Isocyanats (D) aus dem so erhaltenen Reaktionsgemisch,
in dem die Verbindung (S) die Formel 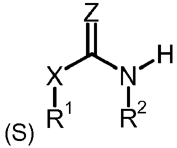 aufweist, worin
R¹ und R² unabhängig voneinander C₁ - C₂₀-Alkyl, C₆ - C₁₂-Aryl oder C₅ - C₁₂-Cycloalkyl, die gegebenenfalls durch Aryl, Alkyl, Aryloxy, Alkyloxy, Heteroatome und/oder Heterocyclen substituiert sein können, R² zusätzlich Wasserstoff und
wobei R¹ und R² auch gemeinsam mit der Gruppe X-(CO)-NH einen 5 bis 12-gliedrigen Ring bilden können, wobei R¹ und R² gemeinsam einen gegebenenfalls substituierten zweiwertigen C₂ bis C₉-Alkylenrest bilden, der auch Bestandteil eines Arylen- oder Cycloalkylenrestes sein kann,
Z Sauerstoff (O) oder Schwefel (S), bevorzugt Sauerstoff
X Sauerstoff (O), Schwefel (S), Imino (NH) oder substituiertes Imino (NR³) und R³ C₁ bis C₄-Alkyl
bedeuten,
wobei der Rest R¹ mindestens eine Mercapto-, Amino-, monosubstituierte Amino- oder Hydroxygruppe aufweist.

Mit dem erfindungsgemäßen Verfahren können Produkte mit einer geringeren Viskosität und/oder Farbzahl erhalten werden und/oder lagerstabile Produkte, die nach der Herstellung einen geringeren Anstieg von Viskosität und/oder Farbzahl zeigen.
Die eingesetzten Isocyanate (D) können aromatisch, aliphatisch oder cycloaliphatisch sein, bevorzugt aliphatisch oder cycloaliphatisch, was in dieser Schrift kurz als (cyclo)aliphatisch bezeichnet wird, besonders bevorzugt sind aliphatische Isocyanate. Aromatische Isocyanate sind solche, die mindestens ein aromatisches Ringsystem enthalten.
Cycloaliphatische Isocyanate sind solche, die mindestens ein cycloaliphatisches Ringsystem enthalten.
Aliphatische Isocyanate sind solche, die ausschließlich gerade oder verzweigte Ketten enthalten, also acyclische Verbindungen.
Bei den Isocyanaten (D) handelt es sich bevorzugt um Diisocyanate, die genau zwei Isocyanatgruppen tragen. Es kann sich aber prinzipiell auch um Monoisocyanate mit einer Isocyanatgruppe handeln.

Es kommen prinzipiell auch höhere Isocyanate mit im Mittel mehr als 2 Isocyanatgruppen in betracht. Dafür eignen sich beispielsweise Triisocyanate wie Triisocyanatononan, 2,4,6-Triisocyanatotoluol, Triphenylmethantriisocyanat oder 2,4,4'-Triisocyanatodiphenylether oder die Gemische aus Di-, Tri- und höheren Polyisocyanaten, die beispielsweise durch Phosgenierung von entsprechenden Anilin/Formaldehyd-Kondensaten erhalten werden und Methylenbrücken aufweisende Polyphenylpolyisocyanate darstellen.

Denkbar ist auch der Einsatz von freie Isocyanatgruppen aufweisenden oligomeren Isocyanaten, beispielsweise Isocyanuraten, Uretdionen, Biureten, Urethanen, Allophanaten, Oxadiazintrionen, Iminooxadiazintrionen, Uretoniminen, Carbodiimiden, hyperverzweigten Polyisocyanaten, Polyurethan-polyisocyanat-Präpolymeren oder Polyharnstoff-Polyisocyanat-Präpolymeren (siehe unten).

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5- trimethyl-5-(isocyanatomethyl)cyclohexan (Isophorondüsocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-Isomerengemische, sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, Tetramethylxylylendiisocyanat, 1,4-Diisocyanatobenzol oder Diphenylether-4,4'-diisocyanat.

Besonders bevorzugt sind 1,6-Hexamethylendiisocyanat, 1,3-Bis(isocyanatomethyl)cyclo-hexan, Isophorondiisocyanat und 4,4'- oder 2,4'-Di(isocyanatocyclohexyl)methan, ganz besonders bevorzugt sind Isophorondiisocyanat und Hexamethylendiisocyanat, insbesondere bevorzugt ist Hexamethylendiisocyanat.

Es können auch Gemische der genannten Isocyanate vorliegen. Dazu kann es möglich sein, zunächst ein Isocyanat mit der Verbindung (S) und das so erhaltene Reaktionsprodukt dann mit anderen Isocyanaten umzusetzen. Ein bevorzugtes Gemisch setzt sich zusammen aus 1,6-Hexamethylendiisocyanat und Isophorondiisocyanat. Isophorondiisocyanat liegt zumeist als ein Gemisch, und zwar der cis- und trans-Isomere vor, in der Regel im Verhältnis von ca. 60:40 bis 80:20 (w/w), bevorzugt im Verhältnis von ca. 70:30 bis 75:25 und besonders bevorzugt im Verhältnis von ca. 75:25.

Dicyclohexylmethan-4,4'-diisocyanat kann ebenfalls als Gemisch der verschiedenen cis- und trans-Isomere vorliegen.

Für die vorliegende Erfindung können sowohl solche Diisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethylcyclohexan (Isophorondiisocyanat bzw. IPDI) hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und gegebenenfalls in Gegenwart von N-unsubstituierten Carbaminsäureestern, Dialkylcarbonaten und anderen aus dem Reaktionsprozeß zurückgeführten Nebenprodukten. So erhaltene Diisocyanate weisen in der Regel einen sehr geringen oder sogar nicht meßbaren Anteil an chlorierten Verbindungen auf, was zu günstigen Farbzahlen der Produkte führt.

In einer Ausführungsform der vorliegenden Erfindung weisen die Diisocyanate (D) einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch Diisocyanate (D) mit einem höheren Chlorgehalt eingesetzt werden, beispielsweise bis zu 500 ppm.

Selbstverständlich können auch Gemische aus solchen Diisocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Die Polyisocyanate (P), zu denen die Isocyanate (D) oligomerisiert werden können, sind in der Regel wie folgt charakterisiert:
Die NCO Funktionalität solcher Verbindungen beträgt in der Regel mindestens 1,8 und kann bis zu 8 betragen, bevorzugt 1,8 bis 5 und besonders bevorzugt 2 bis 4.

Der Gehalt an Isocyanatgruppen nach der Oligomerisierung, berechnet als NCO = 42 g/mol, beträgt in der Regel von 5 bis 25 Gew%.

Bevorzugt handelt es sich bei den Polyisocyanaten (P) um folgende Verbindungen:
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyan-urate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 8.
2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiondiisocyanate werden im Rahmen dieser Erfindung im Gemisch mit anderen Polyisocyanaten, insbesondere den unter 1) genannten, erhalten. Dazu können die Diisocyanate unter Reaktionsbedingungen umgesetzt werden, unter denen sowohl Uretdione als auch die anderen Polyisocyanate gebildet werden, oder zunächst die Uretdione gebildet und diese anschließend zu den anderen Polyisocyanaten umgesetzt werden oder die Diisocyanate zunächst zu den andereren Polyisocyanaten und diese anschließend zu Uretdiongruppen-haltigen Produkten umgesetzt werden.
3) Die Polyisocyanate 1), 2) oder 4) bis 11) können auch nach deren Herstellung in Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, überführt werden. Diese Biuretgruppen aufweisenden Polyisocyanate weisen im allgemeinen einen NCO-Gehalt von 18 bis 22 Gew.-% und eine mittlere NCO-Funktionalität von 2,8 bis 6 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen (A). Diese Urethan- und/oder Allophanatgruppen aufweisenden Polyisocyanate haben im allgemeinen einen NCO-Gehalt von 12 bis 24 Gew.-% und eine mittlere NCO-Funktionalität von 2,5 bis 4,5.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder Isophorondiisocyanat abgeleitet. Solche Iminooxadiazin-diongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-Polyisocyanat-Präpolymere, aus Di- und/oder Polyisocyanaten mit Alkoholen.
11) Polyharnstoff-Polyisocyanat-Präpolymere.

In einer bevorzugten Ausführungsform der vorliegenden Erfindung ist das Polyisocyanat (P) ausgewählt aus der Gruppe bestehend aus Isocyanuraten, Biureten, Urethanen und Allophanaten, bevorzugt aus der Gruppe bestehend aus Isocyanuraten, Urethanen und Allophanaten, besonders bevorzugt aus der Gruppe bestehend aus Isocyanuraten und Allophanaten.

Zur Herstellung von Urethanen und/oder Allophanaten werden die Isocyanate (D) mit mindestens einem ein- oder mehrwertigen Alkohol (A) umgesetzt, wie z.B. Methanol, Ethanol, iso-Propanol, n-Propanol, n-Butanol, iso-Butanol, sek-Butanol, tert-Butanol, n-Hexanol, n-Heptanol, n-Octanol, n-Decanol, n-Dodecanol (Laurylalkohol), 2-Ethylhexanol, n-Pentanol, Stearylalkohol, Cetylalkohol, Laurylalkohol, Ethylenglykolmonomethylether, Ethylenglykolmonoethylether, 1,3-Propandiolmonomethylether, Cyclopentanol, Cyclohexanol, Cyclooctanol, Cyclododecanol, Trimethylolpropan, Neopentylglykol, Pentaerythrit, 1,4-Butan-diol, 1,6-Hexandiol, 1,2-Propandiol, 1,3-Propandiol, 2-Ethyl-1,3-Propandiol, 2-Methyl-1,3-Propandiol, Ethylenglykol, Diethylenglykol, Triethylenglykol, Tetraethylenglykol, Pentaethylenglykol, Glycerin, 1,2-Dihydroxypropan, 2,2-Dimethyl-1,2-ethandiol, 1,2-Butandiol, 1,3-Butandiol, 1,4-Butandiol, Pentan-2,4-diol, 3-Methylpentan-1,5-diol, 2,2,4-Trimethylpentan-1,5-diol, 2-Methylpentan-2,4-diol, 2-Methylpentan-1,3-diol, 2-Ethylhexan-1,3-diol, 2-Propyl-1,3-heptandiol, 2,4-Diethyloctan-1,3-diol, Hydroxypivalinsäureneopentylglykolester, Ditrimethylolpropan, Dipentaerythrit, 2,2-Bis(4-hydroxycyclohexyl)propan, 1,1-, 1,2-, 1,3- und 1,4-Cyclohexandimethanol, 1,2-, 1,3- oder 1,4-Cyclohexandiol oder deren Gemischen erhalten werden können.

Verbindungen (A) können auch monofunktionelle Polyalkylenoxidpolyetheralkohole sein, die durch Alkoxylierung geeigneter Startermoleküle erhältlich sind.

Geeignete Startermoleküle zur Herstellung solcher Polyalkylenoxidpolyetheralkohole sind Thiolverbindungen, Monohydroxyverbindungen der allgemeinen Formel

R¹⁸-O-H

oder sekundäre Monoamine der allgemeinen Formel

R¹⁹R²⁰N-H,

in welchen
R¹⁹, R²⁰ und R¹⁸ unabhängig voneinander jeweils C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus bedeuten oder R¹⁹ und R²⁰ gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.

Bevorzugt sind R¹⁹, R²⁰ und R¹⁹ unabhängig voneinander C₁- bis C₄-Alkyl, besonders bevorzugt sind R¹⁹, R²⁰ und R¹⁹ Methyl.

Beispielsweise geeignete einwertige Startermoleküle können gesättigte, also keine C-C- oder C-Heteroatom-Doppel- oder -Dreifachbindungen enthaltenden, Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, Cyclopentanol, die isomeren Methylcyclohexanole oder Hydroxymethylcyclohexan, 3-Ethyl-3-hydroxymethyloxetan, oder Tetrahydrofurfurylalkohol; aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Di-n-Butylamin, Diisobutylamin, Bis-(2-ethylhexyl)-amin, N-Methyl- und N-Ethylcyclohexylamin oder Dicyclohexylamin, heterocylische sekundäre Amine wie Morpholin, Pyrrolidin, Piperidin oder 1H-Pyrazol, sowie Aminoalkohole wie 2-Dimethylaminoethanol, 2-Diethylaminoethanol, 2-Diisopropylaminoethanol, 2-Dibutylaminoethanol, 3-(Dimethylamino)-1-propanol oder 1-(Dimethylamino)-2-propanol.

Bevorzugt sind als Startermoleküle Alkohole mit nicht mehr als 6 Kohlenstoffatomen, besonders bevorzugt nicht mehr als 4 Kohlenstoffatomen, ganz besonders bevorzugt nicht mehr als 2 Kohlenstoffatomen und insbesondere Methanol.

Für die Alkoxylierungsreaktion geeignete Alkylenoxide sind Ethylenoxid, Propylenoxid, iso-Butylenoxid, Vinyloxiran und/oder Styroloxid, die in beliebiger Reihenfolge (zur Herstellung von Blockcopolymeren) oder auch im Gemisch (zur Herstellung von statistischen Copolymeren) bei der Alkoxylierungsreaktion eingesetzt werden können.

Bevorzugte Alkylenoxide sind Ethylenoxid, Propylenoxid und deren Gemische, besonders bevorzugt ist Ethylenoxid.

Bevorzugte Polyetheralkohole sind solche auf Basis von Polyalkylenoxidpolyetheralkoholen, bei deren Herstellung gesättigte aliphatische oder cycloaliphatische Alkohole der oben genannten Art als Startermoleküle eingesetzt wurden. Ganz besonders bevorzugt sind solche auf Basis von Polyalkylenoxidpolyetheralkoholen, die unter Verwendung von gesättigten aliphatischen Alkoholen mit 1 bis 4 Kohlenstoffatomen im Alkylrest hergestellt wurden. Insbesondere bevorzugt sind auf Methanol gestartete Polyalkylenoxidpolyetheralkohole.

Die einwertigen Polyalkylenoxidpolyetheralkohole weisen im statistischen Mittel in der Regel mindestens 2 Alkylenoxideinheiten, bevorzugt 5 Ethylenoxideinheiten, pro Molekül in einpolymerisierter Form auf, besonders bevorzugt mindestens 7 und ganz besonders bevorzugt mindestens 10.

Die einwertigen Polyalkylenoxidpolyetheralkohole weisen im statistischen Mittel in der Regel bis zu 90 Alkylenoxideinheiten, bevorzugt Ethylenoxideinheiten, pro Molekül in einpolymerisierter Form auf, bevorzugt bis zu 45, besonders bevorzugt bis zu 40 und ganz besonders bevorzugt bis zu 30.

Das Molgewicht der einwertigen Polyalkylenoxidpolyetheralkohole beträgt bevorzugt bis zu 4000, besonders bevorzugt bis zu 2000, ganz besonders bevorzugt bis zu 1000 g/mol. Das Molgewicht der einwertigen Polyalkylenoxidpolyetheralkohole beträgt bevorzugt mindestens 300 g/mol, besonders bevorzugt mindestens 400 und ganz besonders bevorzugt mindestens 500 g/mol. Ganz besonders bevorzugt sind Molgewichte von 400 bis 1200, insbesondere von 500 bis 1000 g/mol.

Bevorzugte Polyetheralkohole sind somit Verbindungen der Formel

R¹⁸-O-[-Xᵢ-]ₛ-H

worin
R¹⁸ die oben genannten Bedeutungen hat,
s für eine ganze Zahl von 2 bis 90, bevorzugt 5 bis 45, besonders bevorzugt 7 bis 40 und ganz besonders bevorzugt 10 bis 30 steht und
jedes Xᵢ für i = 1 bis s unabhängig voneinander ausgewählt sein kann aus der Gruppe bestehend aus -CH₂-CH₂-O-, -CH₂-CH(CH₃)-O-, -CH(CH₃)-CH₂-O-, -CH₂-C(CH₃)₂-O-,
-C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-
worin Ph für Phenyl und Vin für Vinyl steht.

Weiterhin bevorzugt kann es sich bei den Verbindungen (A) um solche der Formel (IIa) bis (IId) handeln, 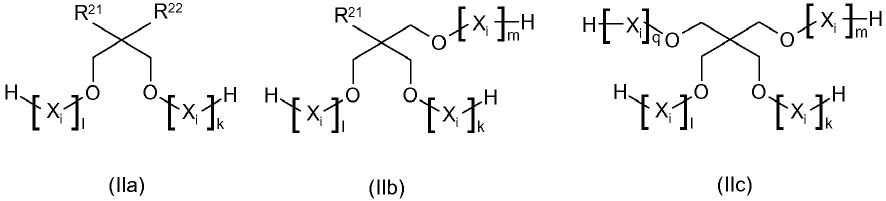 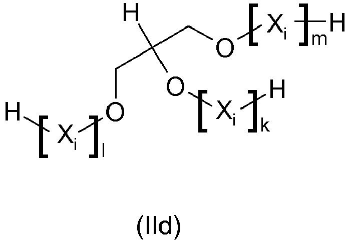 worin
R²¹ und R²² unabhängig voneinander Wasserstoff oder gegebenenfalls durch Aryl, Alkyl, Aryloxy, Alkyloxy, Heteroatome und/oder Heterocyclen substituiertes C₁ - C₂₀-Alkyl,
k, l, m, q unabhängig voneinander je für eine ganze Zahl von 1 bis 15, bevorzugt 1 bis 10 und besonders bevorzugt 1 bis 7 steht und
jedes Xᵢ für i = 1 bis k, 1 bis I, 1 bis m und 1 bis q unabhängig voneinander die obigen Bedeutungen annehmen kann.

Bevorzugt handelt es sich dabei um ein- bis dreißigfach und besonders bevorzugt dreibis zwanzigfach ethoxyliertes, propoxyliertes oder gemischt ethoxyliertes und propoxyliertes und insbesondere ausschließlich ethoxyliertes Neopentylglykol, Trimethylolpropan, Trimethylolethan oder Pentaerythrit oder Glycerin.

Der Anteil an Alkohol (A) kann bis zu 50 Gew%, bevorzugt bis zu 40, besonders bevorzugt bis zu 30 und ganz besonders bevorzugt bis zu 25 Gew% bezogen auf das Isocyanat (D) betragen.

In einer weiteren Ausführungsform der vorliegenden Erfindung kann lediglich ein kleiner Teil Alkohol (A) bezogen auf das Isocyanat (D) eingesetzt werden, beispielsweise 0,25 - 10 Gew%, bevorzugt 0,5 bis 8, besonders bevorzugt 0,75 bis 5 und ganz besonders bevorzugt 1 - 3 Gew%.

In einer bevorzugten Ausführungsform handelt es sich bei dem Alkohol um eine Verbindung mit mindestens einer, bevorzugt genau einer gegenüber Isocyanat reaktiven Gruppe und mindestens einer, beispielsweise ein bis sechs, bevorzugt ein bis fünf, besonders bevorzugt ein bis vier und ganz besonders bevorzugt ein, zwei oder drei radikalisch polymerisierbaren ungesättigten Gruppen, bevorzugt Acrylat- oder Methacrylatgruppen.

Gegenüber Isocyanat reaktive Gruppen können z.B. Hydroxy, Mercapto, Amino oder monosubstituiertes Imino, bevorzugt Hydroxy oder Amino, besonders bevorzugt Hydroxy sein.

Beispiele für derartige Verbindungen sind z.B. Monoester von Methacrylsäure oder bevorzugt Acrylsäure mit Di- oder Polyolen, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,2-, 1,3- oder 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, 2,2-Bis(4-hydroxycyclohexyl)propan, Glycerin, Trimethylolethan, Trimethylolpropan, Trimethylolbutan, Pentaerythrit, Ditrimethylolpropan, Erythrit, Sorbit, Poly-THF mit einem Molgewicht zwischen 162 und 2000, Poly-1,3-propandiol mit einem Molgewicht zwischen 134 und 400 oder Polyethylenglykol mit einem Molgewicht zwischen 238 und 458.

Bevorzugt sind 2-Hydroxyethyl(meth)acrylat, 2- oder 3-Hydroxypropyl(meth)acrylat, 1,4-Butandiolmono(meth)acrylat, Neopentylglykolmono(meth)acrylat, 1,5-Pentandiolmono(meth)acrylat, 1,6-Hexandiolmono(meth)acrylat, Glycerinmono- und di(meth)acrylat, Trimethylolpropanmono- und di(meth)acrylat, Pentaerythritmono-, -di- und -tri(meth)acrylat, 2-Aminoethyl(meth)acrylat, 2-Aminopropyl(meth)acrylat, 3-Aminopropyl(meth)acrylat, 4-Aminobutyl(meth)acrylat, 6-Aminohexyl(meth)acrylat oder 2-Thioethyl(meth)acrylat. Besonders bevorzugt sind 2-Hydroxyethylacrylat, 2-Hydroxyethylmethacrylat, 2- oder 3-Hydroxypropylacrylat, 1,4-Butandiolmonoacrylat, 3-(Acryloyloxy)-2-hydroxypropyl(meth)acrylat sowie die Monoacrylate von Polyethylenglykol der Molmasse von 106 bis 238.

### Katalysator (K)

Zu den Trimerisierungskatalysatoren, die für das erfindungsgemäße Verfahren geeignet sind, gehören zum Beispiel
- Alkaliphenolate des in GB-PS 1,391,066 oder GB-PS 1,386,399 beschriebenen Typs;
- Aziridinderivate in Kombination mit tertiären Aminen des im US-Patent 3,919,218 beschriebenen Typs;
- quartäre Ammoniumcarboxylate des in den US-Patenten 4,454,317 und 4,801,663 beschriebenen Typs;
- quartäre Ammoniumphenolate mit einer zwitterionischen Struktur des im US-Patent 4,335,219 beschriebenen Typs;
- Ammoniumphosphonate und -phosphate des im US-Patent 4,499,253 beschriebenen Typs;
- Alkalicarboxylate, beispielsweise Kobaltnaphthenat, Natriumbenzoat, Natriumacetat, Kaliumformiat und wie in DE-OS 3,219,608 beschrieben;
- basische Alkalimetallsalze, die mit acyclischen organischen Verbindungen komplexiert sind, wie sie im US-Patent 4,379,905 beschrieben sind, etwa Kaliumacetat, das mit einem Polyethylenglycol komplexiert ist, das im Mittel 5 bis 8 Ethylenoxideinheiten enthält;
- basische Alkalimetallsalze, die mit Kronenethern komplexiert sind, wie sie im US-Patent 4,487,928 beschrieben sind;
- Aminosilylgruppen enthaltende Verbindungen, wie Aminosilane, Diaminosilane, Silylharnstoffe und Silazane, wie sie im US-Patent 4,412,073 beschrieben sind;
- Gemische aus Alkalimetallfluoriden und quartären Ammonium- oder Phosphoniumsalzen, wie sie in EP-A 355479 beschrieben sind,
- tertiäre Amine, beispielsweise Triethylamin, N,N-Dimethybenzylamin, Triethylendiamin, Tris-2,4,6-(dimethylaminomethyl)-phenol und Tris-1,3,5-(dimethylaminopropyl)-S-hexahydrotriazin,
- N-heterocyclische Carbene (NHCs) wie in WO 2005/113626
- Alkalioxide, Alkalihydroxide und starke organischen Basen, wie z.B. Alkalialkoholate,
- Zinn-, Zink- bzw. Bleisalze von Alkylcarbonsäuren,
- Organische Metallsalze der Formel (A)ₙ-R-O-CO-O^{⊖}M^{⊕} gemäß US-A-3 817 939, in der bedeuten:
   A eine Hydroxylgruppe oder ein Wasserstoffatom,
   n eine Zahl von 1 bis 3,
   R einen polyfunktionellen linearen oder verzweigten, aliphatischen oder aromatischen Kohlenwasserstoffrest und
   M^{⊕} in Kation, z.B. ein Alkalimetallkation oder ein quarternäres Ammoniumkation, wie Tetraalkylammonium, sowie
- quartäre Hydroxyalkylammoniumverbindungen der Formel

   R⁴,R⁵,R⁶N^{⊕}-CH₂-CH(OH)-R^{7 ⊖}O-(CO)-R⁸

   als Katalysator gemäß DE-A-26 31 733 (US-A-4 040 992).

Besonders geeignet als Katalysatoren für das Verfahren sind quartäre Ammoniumsalze entsprechend der Formel 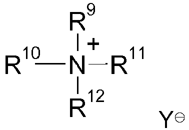 mit
Y^{⊖}= Carboxylat (R¹³COO⁻), Fluorid (F-), Carbonat (R¹³O(CO)O⁻) oder Hydroxid (OH-),
wie sie für Y- = OH- im US-Patent 4,324,879 und in den Deutschen Offenlegungsschriften 2,806,731 und 2,901,479 beschrieben sind.

Bevorzugt handelt es sich bei dem Rest Y^{⊖} um ein Carboxylat, Carbonat oder Hydroxid und besonders bevorzugt um ein Carboxylat oder Hydroxid.

R¹³ ist darin Wasserstoff, C₁ bis C₂₀-Alkyl, C₆ bis C₁₂-Aryl oder C₇ bis C₂₀-Arylalkyl, das jeweils optional substituiert sein kann.

Bevorzugt ist R¹³ Wasserstoff oder C₁ bis C₈-Alkyl.

Bevorzugte quartäre Ammoniumsalze sind diejenigen, bei denen die Reste R⁹ bis R¹² gleiche oder unterschiedliche Alkylgruppen mit 1 bis 20, vorzugsweise 1 bis 4, Kohlenstoffatomen darstellen, die gegebenenfalls durch Hydroxyl- oder Phenylgruppen substituiert sind.

Zwei der Reste R⁹ bis R¹² können auch zusammen mit dem Stickstoffatom und gegebenenfalls einem weiteren Stickstoff- oder Sauerstoffatom einen heterocyclischen, fünf-, sechs- oder siebengliedrigen Ring bilden. Die Reste R⁹ bis R¹¹ können in jedem Falle auch Ethylenreste darstellen, die zusammen mit dem quartären Stickstoffatom und einem weiteren tertiären Stickstoffatom eine bicyclische Triethylendiaminstruktur bilden, vorausgesetzt, daß der Rest R¹² dann eine Hydroxyalkylgruppe mit 2 bis 4 Kohlenstoffatomen darstellt, bei der die Hydroxylgruppe vorzugsweise in der 2-Stellung zu dem quartären Stickstoffatom angeordnet ist. Der hydroxysubstituierte Rest oder die hydroxysubstituierten Reste können auch andere Substituenten enthalten, beispielsweise C₁- bis C₄-Alkyloxy-Substituenten.

Dabei können die Ammoniumionen auch Teil eines ein- oder mehrgliedrigen Ringsystems sein, beispielsweise abgeleitet von Piperazin, Morpholin, Piperidin, Pyrrolidin, Chinuclidin oder Di-aza-bicyclo-[2.2.2]-octan.

Beispiele für 1 bis 20 Kohlenstoffatome aufweisende Gruppen R⁹ bis R¹² sind unabhängig voneinander Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl,1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, 2-Hydroxyethyl, 2-Hydroxypropyl, 3-Hydroxypropyl, 4-Hydroxybutyl, 6-Hydroxyhexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl, 6-Ethoxyhexyl, Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Methylnaphthyl, Isopropylnaphthyl, Chlornaphthyl, 2,6-Dimethylphenyl, 2,4,6-Trimethylphenyl, 2,6-Dimethoxyphenyl, 2,6-Dichlorphenyl, Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Chlorcyclohexyl, Dichlorcyclohexyl, Dichlorcyclopentyl, Norbornyl oder Norbornenyl.

Bevorzugte sind unabhängig voneinander die Reste R⁹ bis R¹² C₁ bis C₄-Alkyl. R¹² kann zusätzlich Benzyl sein oder ein Rest der Fomel 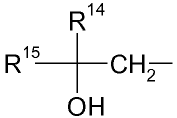 worin R¹⁴ und R¹⁹ unabhängig voneinander Wasserstoff oder C₁ bis C₄-Alkyl sein kann.

Besonders bevorzugte Reste R⁹ bis R¹² sind unabhängig voneinander Methyl, Ethyl und n-Butyl und für R¹² zusätzlich Benzyl, 2-Hydroxyethyl und 2-Hydroxypropyl.

Bevorzugt können für das erfindungsgemäße Verfahren folgende Katalysatoren eingesetzt werden:
Quarternäre Ammoniumhydroxide, vorzugsweise N,N,N-Trimethyl-N-benzylammoniumhydroxid und N,N,N-Trimethyl-N-(2-hydroxypropyl)-ammoniumhydroxid, gemäß DE-A-38 06 276.

Hydroxyalkyl substituierte quarternäre Ammoniumhydroxide gemäß EP-A-10 589 (US-A-4 324 879).

Organische Metallsalze der Formel (A)ₙ-R-O-CO-O^{⊖}M^{⊕} gemäß US-A-3 817 939, in der bedeuten, A eine Hydroxylgruppe oder ein Wasserstoffatom, n eine Zahl von 1 bis 3, R einen polyfunktionellen linearen oder verzweigten, aliphatischen oder aromatischen Kohlenwasserstoffrest und M ein Kation einer starken Base, z.B. ein Alkalimetallkation oder ein quarternäres Ammoniumkation, wie Tetraalkylammonium.

In dieser Schrift bedeuten
gegebenenfalls durch Aryl, Alkyl, Aryloxy, Alkyloxy, Heteroatome und/oder Heterocyclen substituiertes C₁ -C₂₀-Alkyl beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Hetadecyl, Octadecyl, Eicosyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl,1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenylthioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 3-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl,
gegebenenfalls durch Aryl, Alkyl, Aryloxy, Alkyloxy, Heteroatome und/oder Heterocyclen substituiertes C₆ - C₁₂-Aryl beispielsweise Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, E-thoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl,
gegebenenfalls durch Aryl, Alkyl, Aryloxy, Alkyloxy, Heteroatome und/oder Heterocyclen substituiertes C₅ - C₁₂-Cycloalkyl beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie z.B. Norbornyl oder Norbornenyl,
zweiwertige C₂ bis C₉-Alkylenreste, die auch Bestandteil eines Arylen- oder Cycloalkylenrestes sein können, sind beispielsweise 1,2-Ethylen, 1,2-Propylen, 1,3-Propylen, 1,6-Hexylen, 2,2,4-Trimethylhexylen, 1,4-Cyclohexylen, Isopropyliden-1,4-dicyclohexylen, 1,2- 1,3- oder 1,4-Phenylen, 4,4'-Biphenylen, 4,4'-Bisphenylmethylen, 1,3-, 1,4- oder 1,5-Naphthylen, 3,3'-Dimethyl-4,4'-diphenylen, 3,3'-Dichlor-4,4'-diphenylen, 2,4- oder 2,6-Pyridyl, 1,4-Anthrachinondiyl, m- oder p-Toluylen, 4,6-Dimethyl-1,3-phenylen, 4,6-Dichloro-1,3-phenylen, 5-Chloro-1,3-phenylen, 5-Hydroxy-1,3-phenylen, 5-Methoxy-1,3-phenylen, 2,3-Dimethyl-1,4-phenylen m- oder p-Xylylen, Methylen-di-p-phenylen, Isopropyliden-di-p-phenylen, Thio-di-p-phenylen, Dithio-di-p-phenylen, Sulfo-di-p-phenylen, Carbonyl-di-p-phenylen, und
C₁ bis C₄-Alkyl beispielsweise Methyl, Ethyl, Propyl, Isopropyl, n-Butyl, sec-Butyl oder tert.-Butyl,

Die Herstellung dieser quartären Ammoniumkatalysatoren erfolgt in bekannter Weise durch Umsetzen eines tertiären Amins mit einem Alkylenoxid in einem wäßrigalkoholischen Medium (vgl. US-Patent 3,995,997, Spalte 2, Zeilen 19-44).

Beispiele für geeignete tertiäre Amine sind Trimethylamin, Tributylamin, 2-Dimethylaminoethanol, Triethanolamin, Dodecyldimethylamin, N,N-Dimethylcyclohexylamin, N-Methylpyrrolidin, N-Methylmorpholin und 1,4-Diazabicyclo[ 2.2.2]octan. Beispiele für geeignete Alkylenoxide sind Ethylenoxid, Propylenoxid, 1,2-Butylenoxid, Styroloxid und Methoxy-, Ethoxy- oder Phenoxypropylenoxid.

Die meistbevorzugten Katalysatoren (K) sind N,N,N,N-Tetramethylammoniumhydroxid, N,N,N,N-Tetraethylammoniumhydroxid, N,N,N,N-Tetra-n-butylammoniumhydroxid, N,N,N-Trimethyl-N-(2- hydroxyethyl)ammoniumhydroxid, N,N,N-Trimethyl-N-( 2-hydroxypropyl)ammoniumhydroxid, N,N,N-Trimethyl-N-benzylammoniumhydroxid, N-(2-Hydroxypropyl)-N,N,N-trimethylammonium-2-ethylhexanoat (DABCO TMR®) und N-(2-Hydroxypropyl)-N,N,N-trimethylammonium-2-formiat (DABCO TMR®-2) der Firma Air Products.

Weiterhin bevorzugt sind solche Trimerisierungskatalysatoren wie sie bekannt sind aus der DE 10 2004 012571 A1, dort besonders Absatz [0017] bis [0027], sowie aus der EP-A1 668 271, dort besonders von S. 4, Z. 16 bis S. 6, Z. 47, was hiermit Bestandteil der vorliegenden Offenbarung sei.

Die Katalysatoren (K) werden im allgemeinen in Mengen von etwa 0,0005 bis 5 Gew.-%, vorzugsweise etwa 0,002 bis 2 Gew.-%, bezogen auf das eingesetzte Isocyanat, verwendet. Wenn beispielsweise ein bevorzugter Katalysator, wie N,N,N- Trimethyl-N-(2-hydroxypropyl)ammoniumhydroxid eingesetzt wird, sind Mengen von etwa 0,0005 bis 1 Gew.-%, vorzugsweise etwa 0,001 bis - 0,02 Gew.-%, bezogen auf das Ausgangsisocyanat, im allgemeinen ausreichend.

Die Katalysatoren können in reiner Form oder in Lösung verwendet werden. Zur besseren Handhabung kann der Katalysator in einem Lösungsmittel gelöst werden. Es eignen sich hierzu beispielsweise Alkohole, insbesondere Diole, Ketone, Ether und Ester. Die in dieser Schrift aufgeführten Lösungsmittel, die gegenüber Isocyanatgruppen inert sind, sind als Lösungsmittel geeignet, je nach dem Typ des Katalysators. Dimethylformamid oder Dimethylsulfoxid können ebenfalls als Lösungsmittel für die Katalysatoren verwendet werden.

Beispielsweise werden die oben erwähnten Katalysatoren DABCO TMR® und DABCO TMR®-2 bevorzugt als ca. 33 bis 75 Gew%ige Lösung in Diethylenglykol, Dipropylenglykol oder bevorzugt Ethylenglykol eingesetzt.

Denkbar ist auch die Verwendung von Monoalkoholen, bevorzugt Alkanolen als Lösungsmittel, beispielsweise Methanol, Ethanol, iso-Propanol, n-Propanol, n-Butanol, iso-Butanol, sek-Butanol, tert-Butanol, n-Hexanol, n-Heptanol, n-Octanol, n-Decanol, n-Dodecanol (Laurylalkohol) oder 2-Ethylhexanol.

Weiterhin geeignet sind solche Aminosilylverbindungen, wie sie beschrieben sind in US 4,412,073, dort besonders von Spalte 3, Zeile 2 bis 33 und Spalte 4, Zeile 1 bis Spalte 6, Zeile 4, auf die hiermit im Rahmen der vorliegenden Offenbarung explizit Bezug genommen sei. Unter diesen Aminosilylverbindungen sind besonders Methylaminotrimethylsilan, Dimethylaminotrimethylsilan, Diethylaminotrimethylsilan, Dibutylaminotrimethylsilan, Diethylaminodimethylvinylsilan, Diethylamino dimethylphenylsilan, Bis (dimethylamino) dimethylsilan, Bis (diethylamino) dimethylsilan, Bis (dibutylamino) dimethylsilan, Bis (dimethylamino) methyl phenyl silan, N-Methyl-N-trimethylsilyl-N'-methyl-N'-butylharnstoff, N-Methyl-N-trimethylsilyl-N', N'-dimethylharnstoff, N-Ethyl-N-trimethylsilyl-N', N'-dimethylharnstoff und N-Butyl-N-trimethylsilyl-N', N'-dimethylharnstoff geeignet.

Ganz besonders geeignet sind Hexamethyldisilazan, Heptamethyldisilazan, Hexaethyldisilazan, 1,3-Diethyl-1,1,3,3-tetramethyldisilazan, 1,3-Divinyl-1,1,3,3-tetramethyldisilazan, 1,3-Diphenyl-1,1,3,3-tetramethyldisilazan und insbesondere Hexamethyldisilazan.

### Lösungsmittel (L)

Die Reaktion kann optional in mindestens einem Lösungsmittel durchgeführt werden oder das erhaltene Polyisocyanat (P) kann nach Abtrennung des unumgesetzten Isocyanats (D) in einem solchen formuliert werden.

Beispiele für derartige Lösungsmittel sind aromatische und/oder (cyclo)aliphatische Kohlenwasserstoffe und deren Gemische, halogenierte Kohlenwasserstoffe, Ester und Ether.

Bevorzugt sind aromatische Kohlenwasserstoffe, (cyclo)aliphatische Kohlenwasserstoffe, Alkansäurealkylester, alkoxylierte Alkansäurealkylester und deren Gemische.

Besonders bevorzugt sind ein- oder mehrfach alkylierte Benzole und Naphthaline, Alkansäurealkylester und alkoxylierte Alkansäurealkylester sowie deren Gemische.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell, Caromax® (z.B. Caromax® 18) der Firma Petrochem Carless und Hydrosol der Firma DHC (z.B. als Hydrosol® A 170). Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

Der Gehalt an aliphatischen Kohlenwasserstoffen beträgt in der Regel weniger als 5, bevorzugt weniger als 2,5 und besonders bevorzugt weniger als 1 Gew%.

Halogenierte Kohlenwasserstoffe sind beispielsweise Chlorbenzol und Dichlorbenzol oder dessen Isomerengemische.

Ester sind beispielsweise n-Butylacetat, Ethylacetat, 1-Methoxypropylacetat-2 und 2-Methoxyethylacetat.

Ether sind beispielsweise THF, Dioxan sowie die Dimethyl-, -ethyl- oder -n-butylether von Ethylenglykol, Diethylenglykol, Triethylenglykol, Propylenglykol, Dipropylenglykol oder Tripropylenglykol.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen, beispielsweise Petrolether oder Ligroin.

Weiterhin bevorzugt sind n-Butylacetat, Ethylacetat, 1-Methoxypropylacetat-2, 2-Methoxyethylacetat, sowie deren Gemische, insbesondere mit den oben aufgeführten aromatischen Kohlenwasserstoffgemischen.

Derartige Gemische können im Volumenverhältnis 5:1 bis 1:5 erstellt werden, bevorzugt im Volumenverhältnis 4:1 bis 1:4, besonders bevorzugt im Volumenverhältnis 3:1 bis 1:3 und ganz besonders bevorzugt im Volumenverhältnis 2:1 bis 1:2.

Bevorzugte Beispiele sind Butylacetat/Xylol, Methoxypropylacetat/Xylol 1:1, Butylacetat/Solventnaphtha 100 1:1, Butylacetat/Solvesso® 100 1:2 und Kristallöl 30/Shellsol® A 3:1.

Der Schritt a) kann batchweise oder kontinuierlich durchgeführt werden und kann in einer typischen Ausführungsform beispielsweise folgendermaßen durchgeführt werden:
Im Schritt a) findet die Reaktion der Reaktanden in mindestens einer Reaktionszone statt.

Unter Reaktionszonen werden hier solche Apparate und Behälter verstanden, in denen das Isocyanat in Gegenwart mindestens eines Katalysators zu mindestens 10%, bevorzugt zu mindestens 15 und besonders bevorzugt zu mindestens 20 % umgesetzt wird.

Dabei kann es sich um jegliche für solche Zwecke bekannten Reaktionszonen handeln, beispielsweise ein oder mehrere Rührkessel, ein oder mehrere Rohrreaktoren oder Kombinationen davon. Denkbar sind ferner Taylorreaktoren, Ringspaltreaktoren, Mikroreaktoren, Kesselkaskaden, Reaktionsextrudern und Kombinationen aus diesen Reaktoren.

Die Stufe a) besteht in der Regel aus zwei oder mehr rückvermischten Reaktionszonen, beispielsweise 2 bis 6, bevorzugt 2 - 5, besonders bevorzugt 3 - 5 und ganz besonders bevorzugt vier. Mehr Reaktionszonen sind denkbar, bringen jedoch in der Regel keine wesentlichen Vorteil.

Die mittlere Gesamtverweilzeit in Stufe a) kann bis zu 7 Stunden betragen, bevorzugt bis zu 90 Minuten, besonders bevorzugt bis zu 60 Minuten, ganz besonders bevorzugt bis zu 45 Minuten und insbesondere bis zu 30 Minuten. Eine längere Verweilzeit ist möglich bringt aber in der Regel keine Vorteile.

Die mittlere Gesamtverweilzeit in Stufe a) beträgt in der Regel mindestens 2 Minuten, bevorzugt mindestens 5 Minuten, besonders bevorzugt mindestens 10 Minuten, ganz besonders bevorzugt mindestens 15 Minuten in und insbesondere mindestens 20 Minuten.

Die Reaktionszone kann rückvermischt oder nicht rückvermischt sein, auch Kombinationen davon sind denkbar.

Bei den Reaktionszonen kann es sich beispielsweise um eine Hintereinanderschaltung von mehreren Rührkesseln handeln (Rührkesselkaskade) oder um mindestens einen Rührkessel, der durch eine geeignete Aufteilung des Reaktionsvolumens beispielsweise durch Trennbleche in mehrere Zonen unterteilt ist (kaskadierter Rührkessel) oder Kombinationen davon.

Der volumenspezifische Leistungseintrag pro rückvermischter Reaktionszone sollte nicht weniger als 0,1 W/l, bevorzugt nicht weniger als 0,2 W/l und besonders bevorzugt nicht weniger als 0,5 W/l betragen. In der Regel sind bis zu 10 W/l ausreichend, bevorzugt bis zu 5, besonders bevorzugt bis zu 3 und ganz besonders bevorzugt bis zu 2 W/l. Der angegebene spezifische Leistungseintrag ist hier als eingetragene Leistung pro Liter Reaktorraumvolumen des Reaktors aufzufassen.

Die Leistung kann über alle möglichen Rührertypen, wie Propeller-, Schrägblatt-, Anker-, Scheiben-, Turbinen- oder Balken-Rührer eingetragen werden. Bevorzugt werden Scheiben- und Turbinen-Rührer eingesetzt.

Der Rührkessel kann mit oder ohne Stromstörer betrieben werden. Bevorzugt erfolgt der Betrieb mit Stromstörern. Der Betrieb erfolgt üblicherweise mit 1 bis 10 Stromstörern, bevorzugt mit 2 bis 6, besonders bevorzugt mit 2, 3, oder 4 Stromstörern je Segment.

Im Fall eines kaskadierten Rührkessels können auch mehrere Rührer auf der Welle installiert sein. Bevorzugt wird pro Segment der Kaskade ein Rührer auf der Welle verwendet. Der Durchmesser der Rührelemente beträgt das 0,1 bis 0,9 fache des Rührkesseldurchmessers, bevorzugt das 0,2 bis 0,6 fache des Rührkesseldurchmessers.

In einer bevorzugten Ausführungsform können Durchmischung und Energieeintrag in den Reaktionszonen auch durch mindestens einen Umpumpkreislauf erfolgen, der gegebenenfalls durch mindestens einen in diesem Umpumpkreislauf angebrachten Wärmetauscher temperiert werden kann.

Bei den Rührkesseln kann es sich jeweils beispielsweise um Kessel mit Doppelwandheizung, aufgeschweißten Voll- oder Halbrohren, oder innenliegenden Heizschlangen handeln. Alternativ sind Kessel mit außenliegendem Wärmetauscher und Naturumlauf, bei dem der Kreislaufstrom ohne mechanische Hilfsmittel bewerkstelligt wird, oder Zwangsumlauf (unter Verwendung einer Pumpe) eingesetzt.

Geeignete Umlaufverdampfer sind dem Fachmann bekannt und beispielsweise beschrieben in R. Billet, Verdampfertechnik, HTB-Verlag, Bibliographisches Institut Mannheim, 1965, 53. Beispiele für Umlaufverdampfer sind Rohrbündelwärmetauscher, Plattenwärmetauscher, etc.

Als Pumpen werden im erfindungsgemäßen Verfahren bevorzugt in allen Strömen, in denen eine isocyanathaltiger Strom gefördert wird, zwangsfördernde Pumpen, beispielsweise Zahnrad-, Schlauch-, Schrauben-, Exzenterschnecken-, Spindel- oder Kolbenpumpen oder Kreiselpumpen eingesetzt.

Zwangsfördernde Pumpen werden hier bevorzugt zur Förderung von Strömen eingesetzt, die eine Viskosität von 250 mPas oder mehr aufweisen, besonders bevorzugt 300 mPas oder mehr, ganz besonders bevorzugt 400 mPas oder mehr und insbesondere 500 mPas oder mehr. Kreiselpumpen werden bevorzugt zur Förderung von Strömen mit einer Viskosität bis zu 300 mPas, besonders bevorzugt bis zu 250 mPas und ganz besonders bevorzugt bis zu 200 mPas eingesetzt.

Selbstverständlich können im Umlauf auch mehrere Wärmetauscher vorhanden sein.

Die rückvermischten Reaktionszonen werden in der Regel beheizt ausgeführt. Die Beheizung kann beispielsweise über eine Mantelheizung, aufgeschweißte Voll- oder Halbrohre, über innenliegende Rohre oder Platten und/oder über einen Kreislauf mit einem externen Wärmetauscher, z. B. Röhren- oder Plattenwärmetauscher, erfolgen. Bevorzugt wird für die Erfindung ein Kreislauf mit einem externen Wärmetauscher verwendet. Die gleichmäßige Durchmischung der Reaktionslösung erfolgt auf bekannte Weise, z.B. durch Rühren, Umpumpen, Zwangs- oder Naturumlauf, vorzugsweise durch Zwangs- oder Naturumlauf.

Gegebenenfalls kann noch Katalysator (K) und/oder Isocyanat (D), gegebenenfalls in einem Lösungsmittel (L), in die Stufe a) nachdosiert werden. Dies kann dann in jede Reaktionszone einzeln und unabhängig voneinander erfolgen.

Bevorzugt wird der Katalysator und frisches Isocyanat in einem Umpumpkreislauf miteinander vermischt, indem die beiden Ströme z.B. direkt vor einer Pumpe miteinander in Kontakt gebracht werden. Dieser Umpumpkreislauf vermischt den Inhalt der ersten Reaktionszone. Direkt in diese erste oder in die zweite Reaktionszone kann rückgeführtes Isocyanat geleitet werden.

Eine weitere Ausführung der Erfindung besteht im Aufbau eines Mischkreises, enthaltend eine Pumpe zum Umpumpen des Isocyanats, gegebenenfalls versehen mit Pumpenvorlage und/oder Mischeinrichtung. Dabei saugt die Pumpe aus der Pumpenvorlage den isocyanathaltigen Strom und fördert diesen zur Mischeinrichtung. Bevor der Strom in die Mischeinrichtung eintritt, wird dem isocyanathaltigen Strom der Frischisocyanatstrom beigefügt, er kann auch in die Pumpenvorlage dosiert werden. Zur Unterstützung der Einmischung des Frischisocyanatstroms in den isocyanathaltigen Umpumpstrom kann eine statische Mischeinrichtung verwendet werden.

In der Mischeinrichtung werden dann der isocyanathaltige Strom und der katalysatorhaltige Strom vermischt. Der Austrag aus der Mischeinrichtung wird bei der Ausführung als Mischkreis zumindest teilweise wieder in die Pumpenvorlage befördert. Der restliche Teilstrom des Austrags wird in Reaktionszone überführt. Dabei ist die Verwendung der Pumpenvorlage nicht zwingend, sie erleichtert nur den regelungstechnisch sinnvollen Betrieb der Pumpe.

Eine bevorzugte Ausführung der Erfindung besteht in der Kombination eines Mischkreises mit der Reaktionszone. Dazu wird der Reaktionszone ein isocyanathaltiger Strom über eine Pumpe entnommen und zur Mischeinrichtung befördert. In der Mischeinrichtung wird der katalysatorhaltige Strom eingemischt. Der aus der Mischeinrichtung austretende Strom wird in die Reaktionszone zurückgeführt. Der Katalysatorstrom und der Frischisocyanatstrom werden entweder dem isocyanathaltigen Strom vor der Mischdüse zugeführt und/oder direkt in die Reaktionszone eingeleitet. Bevorzugt wird der Frischisocyanatstrom mit dem Katalysatorstrom vorgemischt und dieses Frischisocyanat/Katalysatorgemisch wird vor der Mischdüse, besonders bevorzugt vor der Pumpe dem Isocyanatstrom beigefügt.

Die Temperatur im rückvermischten Reaktorsystem beträgt im allgemeinen zwischen 40 °C und 170 °C, bevorzugt zwischen 45 °C und 160 °C, besonders bevorzugt zwischen 50 und 150 °C und ganz besonders bevorzugt zwischen 60 und 140 °C.

Das Überführen des Reaktionsaustrages aus einer Reaktionszone in die nachfolgende Stufe kann vorteilhaft mit standgeregelten Ventilen erfolgen.

Es stellt einen Vorteil der vorliegenden Erfindung dar, daß die einzelnen Reaktionszonen unterschiedlich temperiert und mit unterschiedlichen Verweilzeiten betrieben werden können.

So kann es beispielsweise sinnvoll sein, die Reaktionstemperatur entlang der Reaktionszonen anzuheben, so daß beispielsweise die Temperatur in der zweiten Reaktionszone um 5, bevorzugt um 10, besonders bevorzugt um 15 und ganz besonders bevorzugt um 20 °C höher liegt, als in der ersten Reaktionszone.

In einer gegebenenfalls vorhandenen dritten Reaktionszone kann die Temperatur weiter um 5, bevorzugt um 10, besonders bevorzugt um 15 und ganz besonders bevorzugt um 20 °C erhöht werden.

Die erfindungsgemäße Reaktion kann in Gegenwart von Kohlenstoffdioxid (CO₂) durchgeführt werden, wobei der Gehalt in der Regel 0 - 2000 Gew.ppm, bevorzugt 0 bis 200 Gew.ppm beträgt.

Wenn Kohlenstoffdioxid zugeführt wird, so kann über das Reaktionsgemisch geleitet oder durch dieses hindurch geführt werden, beispielsweise durch eine Einleitung oder ein Fritte. Das Kohlenstoffdioxid kann aber auch im eingesetzten Isocyanat gelöst enthalten sein, so daß die Zufuhr von zusätzlichem Kohlenstoffdioxid nicht erforderlich ist.

Alternativ kann der Reaktionsschritt a) auch in mindestens einem Rohrreaktor durchgeführt werden.

Isocyanat (D) und Katalysator (K) werden dann einem aus mindestens einem Rohrreaktor bestehenden Reaktorsystem zugeführt.

Der Rohrreaktor sollte weitestgehend rückvermischungsfrei sein. Dies wird beispielsweise erreicht durch das Verhältnis des Durchmessers des Rohrreaktors zu dessen Länge oder durch Einbauten, wie Lochböden, Schlitzböden oder statische Mischer. Bevorzugt wird die Rückvermischungsfreiheit durch das Verhältnis von Länge zu Durchmessers des Rohrreaktors erreicht.

Als Rohrreaktor eignen sich alle Rohre, deren Längen- zu Durchmesserverhältnis größer als 5 ist, bevorzugt größer als 6, besonders bevorzugt größer als 10, ganz besonders bevorzugt größer 10 und insbesondere größer 50.

Die Bodensteinzahl eines solchen Rohrreaktors sollte beispielsweise 3 oder mehr, bevorzugt mindestens 4, besonders bevorzugt mindestens 5, ganz besonders bevorzugt mindestens 8, insbesondere mindestens 10 und speziell mindestens 50 betragen. Prinzipiell ist die Bodensteinzahl nach oben nicht begrenzt, in der Regel ist eine Bodensteinzahl bis zu 600 ausreichend, bevorzugt bis zu 500, besonders bevorzugt bis zu 300 und ganz besonders bevorzugt bis zu 200.

Vorteilhaft ist, wenn eine Reynolds-Zahl Re von mindestens 2300 im Rohrreaktor erreicht wird, bevorzugt mindestens 2700, besonders bevorzugt mindestens 4000, ganz besonders bevorzugt mindestens 6000, insbesondere mindestens 8000 und speziell mindestens 10000.

Zusätzlich sollte der Leistungseintrag im Rohrreaktor nicht weniger als 0,2 W/l betragen, bevorzugt mindestens 0,3 W/l, besonders bevorzugt mindestens 0,5 W/l, und ganz besonders bevorzugt nicht weniger als 1 W/l. In der Regel ist es ausreichend, bis zu 100 W/l, bevorzugt bis zu 50, besonders bevorzugt bis zu 30, ganz besonders bevorzugt bis zu 20 und insbesondere bis zu 10 W/l einzutragen. Der angegebene spezifische Leistungseintrag ist hier als eingetragene Leistung pro Liter Reaktorraumvolumen des Reaktors aufzufassen. Der Leistungseintrag kann durch die Reibung des Fluids mit der Reaktorwandung oder durch druckverlusterzeugende Einbauten wie Blenden, Mischelementen, Loch- oder Schlitzböden erzeugt werden.

Der Rohrreaktor kann eine beliebige Orientierung im Raum aufweisen. Bevorzugt wird er als senkrechter Rohrreaktor aufgebaut, der besonders bevorzugt von unten nach oben durchströmt wird.

Eine zusätzliche Durchmischung könnte, falls gewünscht, dadurch erreicht werden, daß das Reaktionsgemisch im Rohrreaktor mit einem unter den Reaktionsbedingungen inerten Gas oder Gasgemisch durchmischt wird, beispielsweise solche mit einem Sauerstoffgehalt unter 2, bevorzugt unter 1, besonders bevorzugt unter 0,5 Vol%, bevorzugt sind Stickstoff, Argon, Helium, Stickstoff - Edelgas - Gemische, besonders bevorzugt ist Stickstoff.

### Eine solche Gasphase wird bevorzugt im Gleichstrom zur flüssigen Phase gefördert.

Der Rohrreaktor kann isotherm oder temperiert ausgeführt werden. Eine Temperierung kann durch eine Mantelheizung, aufgeschweißte Halb- oder Vollrohre oder durch innenliegende Rohre oder Platten erfolgen. Die Beheizung erfolgt bevorzugt durch den Mantel.

Der Rohrreaktor kann falls gewünscht in mehrere Abschnitte mit unterschiedlicher Temperatur untergliedert werden, beispielsweise 2 bis 4, bevorzugt 2 bis 3.

So kann es beispielsweise sinnvoll sein, die Reaktionstemperatur längs des Rohrreaktors anzuheben, so daß beispielsweise die Temperatur in dem zweiten Abschnitt um 5, bevorzugt um 10, besonders bevorzugt um 15 und ganz besonders bevorzugt um 20 °C höher liegt, als im ersten Reaktionsabschnitt.

In einem gegebenenfalls vorhandenen dritten Abschnitt kann die Temperatur weiter um 5, bevorzugt um 10, besonders bevorzugt um 15 und ganz besonders bevorzugt um 20 °C erhöht werden.

Selbstverständlich kann der Rohrreaktor auch aus mehreren seriell geschalteten Rohrstücken bestehen.

In einer bevorzugten Ausführungsform wird der Rohrreaktor so ausgeführt, daß die Reynolds-Zahl Re des Reaktionsgemischs im Verlauf des Rohrreaktors zwischen Ein- und Ausgang um mindestens 100 Einheiten, bevorzugt um mindestens 500, besonders bevorzugt um mindestens 1000 und ganz besonders bevorzugt um mindestens 2000 Einheiten sinkt.

Der Rohrreaktor besteht aus einer Rohrstrecke, die aus einem einzelnen Rohr oder aus einer Verschaltung von mehreren Rohren aufgebaut sein kann. Die Rohre müssen nicht sämtlich den gleichen Durchmesser aufweisen, dieser kann sich über die Reaktorlänge ändern, um gezielt auf die Reaktionsbedingungen, wie beispielsweise eine veränderte Viskosität mit fortschreitender Reaktion, zu reagieren. Die Temperaturführung des Rohrreaktors kann z.B. so erfolgen, dass der Reaktor als Doppelrohrwärmeaustauscher ausgeführt wird.

Zur Vergrößerung der Produktionskapazität können erfindungsgemäß auch mehrere Rohrreaktoren parallel geschalten werden.

Gegebenenfalls kann in den Rohrreaktor an einer oder mehreren Stellen, beispielsweise am Anfang und in der Mitte des Rohrreaktors, noch Katalysator, Isocyanat und/oder Lösungsmittel nachdosiert werden.

Die mittlere Verweilzeit im Rohrreaktor beträgt in der Regel mindestens 1 min, bevorzugt mindestens 2 min und besonders bevorzugt mindestens 3 min.

Die mittlere Verweilzeit im Rohrreaktor beträgt in der Regel bis 60 min, bevorzugt bis 45 min und besonders bevorzugt bis 30 min.

Die Temperatur im Rohrreaktor beträgt im allgemeinen zwischen 40 °C und 150 °C, bevorzugt zwischen 45 °C und 130 °C und besonders bevorzugt zwischen 50 und 120 °C, wobei die Temperatur gestaffelt werden kann, wie oben ausgeführt.

Der Druck im Rohrreaktor beträgt in der Regel nicht mehr als 10 bar abs, bevorzugt nicht mehr als 7 bar abs, besonders bevorzugt nicht mehr als 5 bar abs, ganz besonders bevorzugt nicht mehr als 3 bar abs und insbesondere nicht mehr als 2 bar abs.

Der Druck im Rohrreaktor sollte mindestens 0,9 bar abs betragen, bevorzugt beträgt er mindestens normalen Druck.

Das Überführen des Reaktionsaustrages in die nachfolgende Stufe kann vorteilhaft über Druckhalteventile erfolgen, wobei der Druck im Rohrreaktor in der Regel mindestens 0,1 bar oberhalb des in Stufe d) herrschenden Druckes betragen sollte. Ist dies nicht der Fall kann das Überführen z.B. mit Hilfe einer Pumpe oder barometrisch erfolgen. Besonders bevorzugt werden standgeregelte Ventile eingesetzt.

Die Innenwände des Rohrreaktors sind in einer bevorzugten Ausführungsform der Erfindung hydraulisch glatt ausgeführt.

Für Verbindungen (S) gilt folgendes:
X kann bevorzugt O, NH oder NR³ sein, besonders bevorzugt O oder NH und ganz besonders bevorzugt O.

Erfindungsgemäß entscheidend bei den Verbindungen (S) ist, daß bei diesen der Rest R¹ mindestens eine gegenüber Isocyanat reaktive Gruppe aufweist.

Wenn die Reste R¹ und R² miteinander verbunden sind, so handelt es sich bei der Verbindung (S) bevorzugt um cyclische Harnstoffe (X=NH oder NR³) 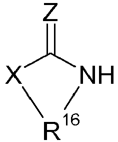 oder um Oxazolidinone (X=O), 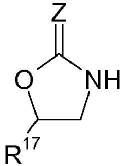 worin
Z Sauerstoff (O) oder Schwefel (S), bevorzugt Sauerstoff
R¹⁶ ein mit mindestens einer Mercapto-, Amino-, monosubstituierten Amino- oder Hydroxygruppe substituiertes C₂ bis C₆-Alkylen und
R¹⁷ geradkettiger oder verzweigter C₁- bis C₄-Alkyl, der mit mindestens einer Mercapto-, Amino-, monosubstituierten Amino- oder Hydroxygruppe substituiert ist, bedeuten.
Bevorzugte Oxazolidinone sind solche, in denen R¹⁷ 4-Hydroxyphenylmethyl, 3-Indolylmethyl, Carboxymethyl, 2-Carboxyethyl, Amidocarboxymethyl, 2-Amidocarboxyethyl, Hydroxymethyl, 1-Hydroxyethyl, Thiomethyl, 4-Aminobutyl, 3-Guanidinopropyl oder (1,3-Imidazol-4-yl)methyl ist.

Weiterhin ist es möglich, als Verbindung (S) solche Carbamate einzusetzen, die erhältlich sind durch
1) Umsetzung eines Amins (M) mit einem Carbonat (C) und
2) gegebenenfalls Aufreinigung des aus 1) erhältlichen Reaktionsgemisches. Amine sind dabei Ammoniak oder primäre Amine, Carbonate sind O,O'-disubstituierte Carbonate mit dem Strukturemelement -O-C(=O)-O-.

Ganz besonders bevorzugte Verbindungen (S) sind solche, die erhältlich sind durch eine Umsetzung gemäß Formel (III), 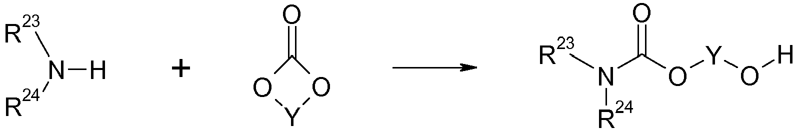 worin
R²³ Wasserstoff,
R²⁴ Wasserstoff, C₁ - C₂₀-Alkyl, gegebenenfalls durch ein oder mehrere Sauerstoff- und/oder Schwefelatome und/oder ein oder mehrere substituierte oder unsubstituierte Iminogruppen unterbrochenes
C₂ - C₂₀-Alkyl, C₂ - C₁₈-Alkenyl,
C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus, wobei die genannten Reste jeweils durch Aryl, Alkyl, Aryloxy, Alkyloxy, Heteroatome und/oder Heterocyclen substituiert sein können,
Y C₂-C₂₀-Alkylen, C₅-C₁₂-Cycloakylen oder durch ein- oder mehrere Sauerstoff- und/oder Schwefelatome und/oder ein oder mehrere substituierte oder unsubstituierte Iminogruppen und/oder durch eine oder mehrere Cycloalkyl-, -(CO)-, -O(CO)O-, -(NH)(CO)O-, -O(CO)(NH)-, -O(CO)- oder -(CO)O-Gruppen unterbrochenes C₂-C₂₀-Alkylen, wobei die genannten Reste jeweils durch Aryl, Alkyl, Aryloxy, Alkyloxy, Heteroatome und/oder Heterocyclen substituiert sein können,
bedeuten.

Bevorzugt ist R²⁴ Wasserstoff, C₁ - C₁₂-Alkyl oder C₅ - C₆-Cycloalkyl besonders bevorzugt ist R²⁴ Wasserstoff, C₁ - C₄-Alkyl oder C₅ - C₆-Cycloalkyl und ganz besonders bevorzugt Wasserstoff oder C₁ - C₄-Alkyl.

Y ist bevorzugt C₂-C₁₀-Alkylen, besonders bevorzugt C₂-C₆-Alkylen, ganz besonders bevorzugt C₂-C₄-Alkylen, insbesondere C₂-C₃-Alkylen und speziell C₂-Alkylen, wobei die genannten Reste jeweils durch Aryl, Alkyl, Aryloxy, Alkyloxy, Heteroatome und/oder Heterocyclen substituiert sein können.

Beispiele für R²⁴ sind Wasserstoff, Methyl, Ethyl, iso-Propyl, n-Propyl, n-Butyl, iso-Butyl, sek-Butyl, tert-Butyl, n-Hexyl, n-Heptyl, n-Octyl, n-Decyl, n-Dodecyl, n-Tetradecyl, n-Hexadecyl, n-Octadecyl, n-Eicosyl, 2-Ethylhexyl, Cyclopentyl, Cyclohexyl, Cyclooctyl, Cyclododecyl, 2-Hydroxyethyl, 2-Hydroxypropyl und 1-Hydroxypropyl.

Beispiele für Y sind 1,2-Ethylen, 1,2-Propylen, 1,1-Dimethyl-1,2-ethylen, 1-Hydroxy methyl-1,2-ethylen, 2-Hydroxy-1,3-propylen, 1,3-Propylen, 1,4-Butylen, 1,6-Hexylen, 2-Methyl-1,3-Propylen, 2-Ethyl-1,3-Propylen, 2,2-Dimethyl-1,3-Propylen und 2,2-Di methyl-1,4-butylen, bevorzugt sind 1,2-Ethylen, 1,2-Propylen, 1,3-Propylen, besonders bevorzugt sind 1,2-Ethylen und 1,2-Propylen und ganz besonders bevorzugt ist 1,2-Ethylen.

Beispielhafte Amine (M) sind Ammoniak, Methylamin, Ethylamin, iso-Propylamin, n-Butylamin, tert-Butylamin, Monoethanolamin, Diethanolamin, Propanolamin, Cyclopentylamin, Cyclohexylamin, Anilin, Ethylendiamin, Diethylentriamin, Triethylentetramin und Tetraethylenpentamin.

Beispielhafte Carbonate (C) sind Ethylencarbonat, 1,3-Propylencarbonat, 1,2-Propylencarbonat und Glycerincarbonat (4-Hydroxymethyl)-ethylencarbonat).

Die Umsetzung eines Amins (M) mit einem Carbonat (C) ist an sich bekannt, beispielsweise aus US 4,820,830, Sp. 4, Z. 44 bis Sp. 5, Z. 9, und nicht beschränkt.

Typischerweise werden das Amin (M) und das Carbonat (C) in einer Stöchiometrie von 0,7 bis 1,2 mol Amin : 1 mol Carbonat, bevorzugt 0,8 - 1,2 : 1, besonders bevorzugt 0,9 - 1,1:1, ganz besonders bevorzugt 0,95 - 1,1:1 und insbesondere 1:1 mol/mol miteinander umgesetzt.

Die Umsetzung erfolgt in der Regel bei einer Temperatur von 0 bis 120 °C, besonders bei 20 bis 100, ganz besonders bevorzugt 30 bis 80 und ganz besonders bevorzugt 40 bis 80 °C.
Die Umsetzung ist in der Regel innerhalb von 12 Stunden beendet, bevorzugt innerhalb von 15 Minuten bis 10 Stunden, besonders bevorzugt in 30 Minuten bis 8 Stunden, ganz besonders bevorzugt 45 Minuten bis 6 Stunden und insbesondere innerhalb von 1 bis 4 Stunden.
Die Umsetzung kann ohne Lösungsmittel durchgeführt werden oder in Anwesenheit eines solchen, beispielsweise Alkohole, Ether, Ketone, Kohlenwasserstoffe oder Wasser, bevorzugt ohne Lösungsmittel.
Das aus 1) erhältliche Reaktionsgemisches kann in einem weiteren Schritt 2) falls gewünscht aufgereinigt werden, beispielsweise durch Filtration, Destillation, Rektifikation, Chromatographie, Behandlung mit Ionentauschern, Adsorbentien, neutraler, saurer und/oder alkalischer Wäsche, Strippen oder Kristallisation.
Besonders bevorzugt sind solche Verbindungen (S), bei denen die Reste R¹ und R² nicht miteinander verbunden sind.
Bevorzugt sind R¹ und R² unabhängig voneinander ausgewählt aus der Gruppe bestehend aus gegebenenfalls substituiertem C₁ bis C₄-Alkyl, solange mindestens einer dieser Reste mindestens eine gegenüber Isocyanat reaktive Gruppe aufweist. R² kann zusätzlich Wasserstoff sein. Solche Reste R¹ oder R², die eine mit NCO reaktive Gruppe tragen, sind Mercapto-, Amino-, monosubstituiertes Amino- oder Hydroxygruppen tragende Reste, besonders bevorzugt eine Hydroxygruppe tragende Reste, ganz besonders bevorzugt solche Reste, die eine Hydroxygruppe in Position 2 tragen. Der 2-Hydroxypropylrest kann die Methylgruppe in Position 1 oder 2 tragen oder eine beliebige Mischung der Isomeren sein.

Insbesondere ist der Rest R¹ ausgewählt aus der Gruppe bestehend aus 2-Hydroxyethyl und 2-Hydroxypropyl.

Bevorzugte Individuen (S) sind O-2-Hydroxyethylcarbamat und O-2-Hydroxypropylcarbamat.

Zur leichteren Dosierbarkeit kann es sinnvoll sein, die Verbindung (S) in mindestens einem Lösungsmittel, beispielsweise einem der oben aufgeführten Lösungsmittel (L) oder bevorzugt in einem Alkohol, besonders bevorzugt einem Alkanol zu lösen, beispielsweise als mindestens 5 Gew%ige Lösung, bevorzugt mindestens 10 Gew%ig, besonders bevorzugt mindestens 15 Gew%ig und ganz besonders bevorzugt mindestens 20 Gew%ig.

Die Obergrenze wird dabei lediglich durch die Löslichkeitsgrenze von (S) in dem Lösungsmittel begrenzt.

Zur Stoppung in Schritt b) wird die Verbindung (S) in einem molaren Verhältnis von beispielsweise 0,5 bis 30, besonders bevorzugt von 0,6 bis 3, ganz besonders bevorzugt 0,8 bis 2, bezogen auf die eingesetzte Katalysatormenge (K) eingesetzt.

### b) Stoppen der Reaktion

Nach Erreichen des gewünschten Umsetzungsgrades wird die Reaktion durch Desaktivierung des Katalysators durch Zusetzen der Verbindung (S) gestoppt.

Der Umsatz kann in Abhängigkeit vom eingesetzten Isocyanat unterschiedlich gewählt werden. Im allgemeinen wird ein Umsatz von 10 bis 60% (bezogen auf den NCO-Gehalt vor der Reaktion) angestrebt, bevorzugt auf 10 bis 40%.

Die Zugabe des Stoppungsmittels (S) erfolgt in der Regel bei der Reaktionstemperatur, kann aber auch bei höherer oder niedrigerer Temperatur erfolgen, beispielsweise bis zu 30 °C niedriger, bevorzugt bis zu 20 °C niedriger und besonders bevorzugt bis zu 10 °C niedriger.

### c) Abtrennen des unumgesetzten Isocyanats (D) aus dem so erhaltenen Reaktionsgemisch,

Das so hergestellte Polyisocyanate enthaltende Reaktionsgemisch wird abschließend in einem Schritt c) in an sich bekannter Weise, beispielsweise durch Dünnschichtdestillation, bei einer Temperatur von 90 bis 220 °C, gegebenenfalls im Vakuum, gegebenenfalls zusätzlich mit Durchleiten von inertem Strippgas, von gegebenenfalls vorhandenen Lösungs- oder Verdünnungsmittel und/oder vorzugsweise von überschüssigen, nicht-umgesetzten Isocyanaten befreit werden, so daß die Isocyanuratgruppen aufweisenden Polyisocyanate mit einem Gehalt an monomeren Isocyanaten von z.B. unter 1,0 Gew.-%, vorzugsweise unter 0,5 Gew.-%, besonders bevorzugt unter 0,3, ganz besonders bevorzugt unter 0,2 und insbesondere nicht mehr als 0,1 Gew% erhältlich sind.

Als Apparate dafür dienen Flash-, Fallfilm-, Dünnschicht- und/oder Kurzwegverdampfer, denen gegebenenfalls eine kurze Kolonne aufgesetzt sein kann.

Die Destillation erfolgt in der Regel bei einem Druck zwischen 0,1 und 300 hPa, bevorzugt unter 200 hPa und besonders bevorzugt unter 100 hPa.

In einer bevorzugten Ausführungsform wird die Destillation mehrstufig durchgeführt in beispielsweise 2 bis 5 Stufen, bevorzugt 2 bis 4 Stufen und besonders bevorzugt 3 bis 4 Stufen.

Dabei wird der Druck vorteilhafterweise von Stufe zu Stufe abgesenkt, beispielsweise beginnend bei 300 - 500 hPa über 100 bis 300 hPa auf 10 bis 100 hPa und anschließend auf 0,1 bis 10 hPa.

Die Temperatur in den einzelnen Destillationsstufen beträgt jeweils von 90 bis 220 °C.

Vorteilhafterweise wird die erste Stufe in einem einfachen Apparat durchgeführt, beispielsweise einem Umlauf-, Flash- oder Kerzenverdampfer und die nachfolgenden Stufen in komplizierteren Apparaten, beispielsweise in Fallfilmverdampfern, Dünnschichtverdampfern, beispielsweise Sambay®- oder Luwaverdampfer, oder Kurzwegverdampfern. Dabei ist es vorteilhaft, apparative Maßnahmen zu ergreifen, durch die die Verweilzeit der Ströme und damit deren thermische Belastung verringert wird, beispielsweise Verzicht auf Zwischenbehälter oder Vorlagebehälter, kurze Rohrwege oder kleinstmögliche Ausführung der Sumpfvolumina.

Das abgetrennte Destillat von monomerem Isocyanat wird bevorzugt in die Stufe a) zurückgeführt und von neuem, ergänzt um frisch zugeführtes Isocyanat, in die Reaktion eingesetzt.

Falls erforderlich kann dieses rückgeführte Destillat einer Behandlung zur Verbesserung der Farbzahl unterworfen werden, beispielsweise einer Filtration über Filter, Aktivkohle oder Aluminiumoxid.

Das fertige Produkt kann dann abschließend, falls gewünscht, mit mindestens einem Lösungsmittel vermischt werden, bevorzugt mit einem der oben aufgeführten Lösungsmittel (L).

Es stellt einen Vorteil des erfindungsgemäßen Verfahrens dar, daß durch die Stoppung mit den Verbindungen (S) keine Fremdatome, also andere Atome als die Gruppe bestehend aus Wasserstoff, Kohlenstoff, Stickstoff und Sauerstoff, in das Reaktionsgemisch eingeschleppt werden. Dies sind bei einer herkömmlichen Stoppung beispielsweise Phosphor (P) bei der Stoppung mit Dialkylphosphaten oder Chlor (Cl) bei der Stoppung mit Benzoylchlorid.

Des weiteren wird bei den Polyisocyanaten (P), die erfindungsgemäß erhalten worden sind, ein geringerer Viskositätsanstieg und/oder ein geringerer Anstieg in der Farbzahl bei mehrwöchiger Lagerung festgestellt, als bei solchen Polyisocyanaten, deren Herstellreaktion beispielsweise mit Dialkylphosphaten oder Benzoylchlorid gestoppt wird.

Die erfindungsgemäß erhaltenen Polyisocyanate können verwendet werden zur Herstellung von Polyurethanen und Polyurethanlacken, beispielsweise für einkomponentige, zweikomponentige, strahlungshärtbare oder Pulverlackbeschichtungssysteme sowie damit hergestellt Lacke zur Beschichtung von verschiedenen Substraten, wie z. B. Holz, Holzfurnier, Papier, Pappe, Karton, Textil, Leder, Vlies, Kunststoffoberflächen, Glas, Keramik, mineralische Baustoffe, Metalle oder beschichtete Metalle.

Bei einer Verwendung in Beschichtungsmitteln können die erfindungsgemäßen Polyisocyanate insbesondere in Grundierungen, Füllern, pigmentierten Decklacken, Basislacken und Klarlacken im Bereich Autoreparatur- oder Großfahrzeuglackierung eingesetzt werden. Besonders geeignet sind solche Beschichtungsmittel für Anwendungen, in denen eine besonders hohe Applikationssicherheit, Außenwitterungsbeständigkeit, Optik, Lösemittel-, Chemikalien- und Wasserfestigkeit gefordert werden, wie in der Autoreparatur- und Großfahrzeuglackierung.

Derartige Beschichtungsmassen eignen sich als oder in Außenbeschichtungen, also solche Anwendungen, die dem Tageslicht ausgesetzt sind, bevorzugt von Gebäudeteilen, Innenbeschichtungen, Beschichtungen auf (Groß-)Fahrzeugen und Flugzeugen und industriellen Anwendungen, Brücken, Gebäuden, Strommasten, Tanks, Containern, Pipelines, Kraftwerken, chemischen Anlagen, Schiffen, Kränen, Pfählen, Spundwänden, Armaturen, Rohren, Fittings, Flanschen, Kupplungen, Hallen, Dächern und Baustahl. Insbesondere werden die erfindungsgemäßen Beschichtungsmassen als oder in Automobilklar- und -decklacke(n) eingesetzt. Weitere bevorzugte Einsatzgebiete sind Can-Coating und Coil-Coating.

Besonders eignen sie sich als Grundierungen, Füller, pigmentierte Decklacke und Klarlacke im Bereich Industrie-, Holz-, Auto-, insbesondere OEM- Lackierung, oder Dekolackierung eingesetzt werden. Ganz besonders geeignet sind die Beschichtungsmittel für Anwendungen, in denen eine besonders hohe Applikationssicherheit, Außenwitterungsbeständigkeit, Optik, Kratzbeständigkeit, Lösemittel- und/oder Chemikalienbeständigkeit gefordert werden. Durch ihre niedrige Farbzahl und hohe Farbstabilität sind sie insbesondere für Beschichtungsmassen für Klarlacke interessant.

### Beispiele

In dieser Schrift angegebene Prozent und ppm-Angaben beziehen sich, wenn nicht anders angegeben, auf Gew% und Gew.ppm.

Die angegebenen Viskositäten wurden gemäß DIN EN ISO 3219 bei 23 °C in einem Kegel-Platte-Rotationsviskosimeter der Firma Physica Rheolab, Typ MC1, gemessen.

### Beispiel 1: (Vergleich, ohne Stopper, nur thermische Stoppung)

588 g 1,6-Hexamethylendiisocyanat (HDI), erhalten durch Phosgenierung von 1,6-Hexamethylendiamin wurden bei Raumtemperatur (23 °C) vorgelegt, unter Stickstoff 1 h gehalten und anschließend auf 40°C erhitzt. Es erfolgte die Zugabe von 60 ppm N,N,N-Trimethyl-N-benzylammoniumhydroxid in Form einer 3 %igen Lösung in Ethylhexanol.
Die Temperatur stieg von 40°C auf 52°C an. Anschließend wurde auf 60°C aufgeheizt. Der NCO-Wert erreichte nach einer Nachreaktionszeit von 100 min 40,6%.
Durch Erhitzen auf 120°C wurde die Reaktion gestoppt. Nach der Filtration wurde das überschüssige HDI in einem Dünnschichtverdampfer bei 170°C Außentemperatur fast vollständig entfernt.
Man erhielt ein gelblich gefärbtes Produkt (Farbzahl 78 Hz, bestimmt gemäß DIN ISO 6271) mit einem NCO-Gehalt von 21,7% und einer Viskosität von 2400 mPas.

Nach der Lagerung (3 Monate bei 50°C wurden folgende Werte gemessen:
Farbzahl: 160 Hz
Viskosität: 3500 mPas

### Beispiel 2: (Vergleich)

Die Verarbeitung erfolgte analog Beispiel 1, jedoch wurde nach Erreichen eines NCO-Wertes von 40,4% die Reaktion mit einem molaren Anteil von Benzoylchlorid, bezogen auf den eingesetzten Katalysator, bei 65 °C abgebrochen.
Farbzahlen nach der Reaktion: 41 Hz
Viskosität: 2450 mPas

Nach der Lagerung (3 Monate bei 50°C) wurden folgende Werte gemessen:
Farbzahl: 85 Hz
Viskosität: 2850 mPas

### Beispiel 3 (erfindungsgemäß)

Die Verarbeitung erfolgte analog Beispiel 1, jedoch wurde als Trimerisierungskatalysator DABCO TMR® der Firma Air Products verwendet. Nach Erreichen eines NCO-Wertes von 40,1 % wurde die Reaktion mit molaren Anteil von XHC-20 (Fa. Huntsman, in obiger Formel (I) X=O, R¹=2-Hydroxyethyl, R²=H), bezogen auf den eingesetzten Katalysator, bei 65 °C abgebrochen.
Nach Zusatz dieses Stoppers beobachtete man eine Temperaturerniedrigung, d.h. der eingesetzte Katatalysator war nicht mehr aktiv.
Farbzahlen nach der Reaktion: 39 Hz
Viskosität: 2400 mPas

Nach der Lagerung ( 3 Monate bei 50°C) wurden folgende Werte gemessen:
Farbzahl: 51 Hz
Viskosität: 2720 mPas

### Beispiel 4 (erfindungsgemäß)

Der Versuch aus Beispiel 3 wurde mit HDI, erhalten durch Umsetzung von 1,6-Hexamethylendiamin mit Harnstoff und n-Butanol und thermischer Spaltung der erhaltenen Carbamate, wiederholt.
Farbzahlen nach der Reaktion: 42 Hz
Viskosität: 2550 mPas

Nach der Lagerung ( 3 Monate bei 50°C) wurden folgende Werte gemessen:
Farbzahl: 55 Hz
Viskosität: 2760 mPas

### Beispiel 5 (erfindungsgemäß)

588 g frisch destilliertes HDI, erhalten aus einem Phosgenierungsverfahren, wurden mit 12 g Ethanol versetzt und 2 Stunden bei 80°C gerührt. Die Temperatur wurde dann auf 65°C abgesenkt. Dann erfolgte die Zugabe 160 ppm DABCO® TMR. Bei einem NCO-Wert von 41,6% erfolgte Zugabe von äquimolarer Menge XHC-20 (Fa. Huntsman, in obiger Formel (I) X=O, R¹=2-Hydroxyethyl, R²=H), bezogen auf den eingesetzten Katalysator.

Es wurde 1 Stunde nachgerührt und erneut der NCO-Wert gemessen.

NCO-Wert nach der Nachreaktion: 41,5%.
Die Weiterverarbeitung erfolgte wie unter Beispiel 1 beschrieben.

| | |
|---|---|
| Farbzahl nach Destillation: | 34 Hz |
| Viskosität nach Destillation: | 1980 mPas |
| Farbzahl nach 3 Monaten, 50°C: | 49 Hz |
| Viskosität nach 3 Monaten, 50°C: | 2050 mPas |

### Beispiel 6 (Vergleich)

Der Versuch wurde wie unter Beispiel 5 durchgeführt, jedoch wurde die Reaktion mit Monochloressigsäure (molar, bezogen auf Katalysator) abgestoppt.

Nach der destillativen Aufarbeitung gelierte das Produkt innerhalb von 2 Tagen.

### Beispiel 7 (Vergleich)

Der Versuch wurde wie unter Beispiel 5 durchgeführt, jedoch wurde die Reaktion ohne Zusatz von reaktionsunterbrechenden Stoffen aufgearbeitet.

Das Produkt vernetzte bereits während der destillativen Aufarbeitung.

### Beispiel 8 (Vergleich)

Der Versuch wurde wie unter Beispiel 5 durchgeführt, jedoch wurde die Reaktion mit Diethylhexylphosphat ( molar, bezogen auf Katalysator) abgestoppt.
Nach der destillativen Aufarbeitung wurde ein helles Produkt erhalten, nach 3 Tagen war das Produkt milchig trüb.

| | |
|---|---|
| Farbzahl nach Destillation: | 49 Hz |
| Viskosität nach Destillation: | 1990 mPas |
| Farbzahl nach 3 Monate, 50°C: | nicht messbar |
| Viskosität nach 3 Monate, 50°C: | 2110 mPas |

## Patentansprüche

1. Verfahren zur Herstellung von Polyisocyanaten (P) durch katalytische Oligomerisierung von Isocyanaten (D), umfassend die Schritte
a) Umsetzen mindestens eines Isocyanats (D) in Gegenwart mindestens einer die Umsetzung des Isocyanats zum gewünschten Polyisocyanat katalysierenden Verbindung (K) unter geeigneten Reaktionsbedingungen gegebenenfalls in Gegenwart mindestens eines Alkohols (A) und gegebenenfalls mindestens eines Lösungsmittels (L),
b) bei Erreichen des gewünschten Umsatzes im Schritt a) Zugeben mindestens einer Verbindung (S) in das Reaktionsgemisch, die den Katalysator (K) in Schritt a) zu desaktivieren vermag, und
c) Abtrennen des unumgesetzten Isocyanats (D) aus dem so erhaltenen Reaktionsgemisch,
in dem die Verbindung (S) die Formel 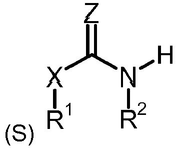 aufweist,
worin
R¹ und R² unabhängig voneinander C₁ - C₂₀-Alkyl, C₆ - C₁₂-Aryl oder C₅ - C₁₂-Cycloalkyl, die gegebenenfalls durch Aryl, Alkyl, Aryloxy, Alkyloxy, Heteroatome und/oder Heterocyclen substituiert sein können,
R² zusätzlich Wasserstoff
und
wobei R¹ und R² auch gemeinsam mit der Gruppe X-(CO)-NH einen 5 bis 12-gliedrigen Ring bilden können, wobei R¹ und R² gemeinsam einen gegebenenfalls substituierten zweiwertigen C₂ bis C₉-Alkylenrest bilden, der auch Bestandteil eines Arylen- oder Cycloalkylenrestes sein kann,
Z Sauerstoff (O) oder Schwefel (S),
X Sauerstoff (O), Schwefel (S), Imino (NH) oder substituiertes Imino (NR³) und R³ C₁ bis C₄-Alkyl
bedeuten,
wobei der Rest R¹ mindestens eine Mercapto-, Amino-, monosubstituierte Amino- oder Hydroxygruppe aufweist.

2. Verfahren gemäß Anspruch 1, **dadurch gekennzeichnet, daß** das Diisocyanat (D) ausgewählt ist aus der Gruppe bestehend aus 1,6-Hexamethylendiisocyanat, 1,3-Bis(isocyanatomethyl)cyclo-hexan, Isophorondiisocyanat, 4,4'- und 2,4'-Di(isocyanatocyclohexyl)methan.

3. Verfahren gemäß Anspruch 1 oder 2, **dadurch gekennzeichnet, daß** das Diisocyanat (D) einen Gesamtgehalt an hydrolysierbarem Chlor von weniger als 200 ppm aufweist.

4. Verfahren gemäß Anspruch 1 oder 2, **dadurch gekennzeichnet, daß** das Diisocyanat (D) einen Gesamtgehalt an hydrolysierbarem Chlor bis zu 500 ppm aufweist.

5. Verfahren gemäß einem der vorstehenden Ansprüche, **dadurch gekennzeichnet, daß** das Polyisocyanat (P) ausgewählt ist aus der Gruppe bestehend aus Isocyanuraten, Biureten, Urethanen und Allophanaten.

6. Verfahren gemäß einem der vorstehenden Ansprüche, **dadurch gekennzeichnet, daß** es sich bei dem Katalysator (K) um ein quartäres Ammoniumsalz Formel 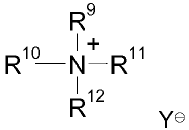 handelt, mit
Y^{⊖}= Carboxylat (R¹³COO⁻), Fluorid (F-), Carbonat (R¹³O(CO)O⁻) oder Hydroxid (OH-),
worin es sich bei R¹³ um Wasserstoff, C₁ bis C₂₀-Alkyl, C₆ bis C₁₂-Aryl oder C₇ bis C₂₀-Arylalkyl, das jeweils optional substituiert sein kann, handelt.

7. Verfahren gemäß Anspruch 6, **dadurch gekennzeichnet, daß** die Reste R⁹ bis R¹² unabhängig voneinander C₁ bis C₄-Alkyl bedeuten und R¹² zusätzlich Benzyl sein kann oder ein Rest der Fomel 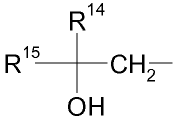 worin R¹⁴ und R¹⁵ unabhängig voneinander Wasserstoff oder C₁ bis C₄-Alkyl sein können.

8. Verfahren gemäß Anspruch 6, **dadurch gekennzeichnet, daß** die Reste R⁹ bis R¹² unabhängig voneinander ausgewählt sind aus der Gruppe bestehend aus Methyl, Ethyl und n-Butyl und R¹² zusätzlich Benzyl, 2-Hydroxyethyl und 2-Hydroxypropyl.

9. Verfahren gemäß einem der vorstehenden Ansprüche, **dadurch gekennzeichnet, daß** der Katalysator (K) ausgewählt ist aus der Gruppe bestehend aus N,N,N,N-Tetramethylammoniumhydroxid, N,N,N,N-Tetraethylammoniumhydroxid, N,N,N,N-Tetra-n-butylammoniumhydroxid, N,N,N-Trimethyl-N-(2- hydroxyethyl)ammoniumhydroxid, N,N,N-Trimethyl-N-( 2-hydroxypropyl)ammoniumhydroxid, N,N,N-Trimethyl-N-benzylammoniumhydroxid, N-(2-Hydroxypropyl)-N,N,N-trimethylammonium-2-ethylhexanoat und N-(2-Hydroxypropyl)-N,N,N-trimethylammonium-2-formiat.

10. Verfahren gemäß einem der Ansprüche 1 bis 5, **dadurch gekennzeichnet, daß** der Katalysator (K) ausgewählt ist aus der Gruppe bestehend aus Hexamethyldisilazan, Heptamethyldisilazan, Hexaethyldisilazan, 1,3-Diethyl-1,1,3,3-tetramethyldisilazan, 1,3-Divinyl-1,1,3,3-tetramethyldisilazan und 1,3-Diphenyl-1,1,3,3-tetramethyldisilazan und insbesondere Hexamethyldisilazan.

11. Verfahren gemäß einem der vorstehenden Ansprüche, **dadurch gekennzeichnet, daß** die Verbindung (S) ausgewählt ist aus der Gruppe bestehend aus cyclischen Harnstoffe (X=NH oder NR³) 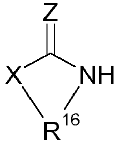 und Oxazolidinonen (X=O), 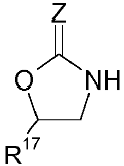 worin
Z Sauerstoff (O) oder Schwefel (S),
R¹⁶ ein mit mindestens einer Mercapto-, Amino-, monosubstituierten Amino- oder Hydroxygruppe substituiertes C₂ bis C₆-Alkylen und
R¹⁷ geradkettiger oder verzweigter C₁- bis C₄-Alkyl, der mit mindestens einer Mercapto-, Amino-, monosubstituierten Amino- oder Hydroxygruppe substituiert ist,
bedeuten,
mit der Maßgabe, daß der Rest R¹⁷ eine Mercapto-, Amino-, monosubstituierte Amino- oder Hydroxygruppe aufweist oder einer der Reste R³ oder R¹⁶.

12. Verfahren gemäß einem der Ansprüche 1 bis 10, **dadurch gekennzeichnet, daß** in der Verbindung (S) R¹ und R² unabhängig voneinander ausgewählt sind aus der Gruppe bestehend aus gegebenenfalls substituiertem C₁ bis C₄-Alkyl, solange mindestens einer dieser Reste mindestens eine Mercapto-, Amino-, monosubstituierte Amino- oder Hydroxygruppe aufweist, wobei R² zusätzlich Wasserstoff sein kann.

13. Verfahren gemäß einem der Ansprüche 1 bis 10, **dadurch gekennzeichnet, daß** es sich bei der Verbindung (S) um solche handelt, die erhältlich sind durch eine Umsetzung gemäß Formel (III), 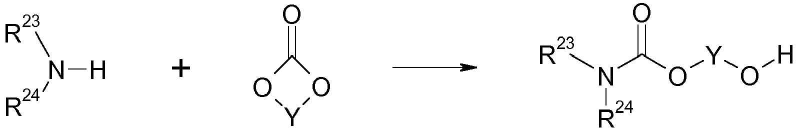 worin
R²³ Wasserstoff,
R²⁴ Wasserstoff, C₁ - C₂₀-Alkyl, gegebenenfalls durch ein oder mehrere Sauerstoff- und/oder Schwefelatome und/oder ein oder mehrere substituierte oder unsubstituierte Iminogruppen unterbrochenes
C₂ - C₂₀-Alkyl, C₂ - C₁₈-Alkenyl,
C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus, wobei die genannten Reste jeweils durch Aryl, Alkyl, Aryloxy, Alkyloxy, Heteroatome und/oder Heterocyclen substituiert sein können,
Y C₂-C₂₀-Alkylen, C₅-C₁₂-Cycloakylen oder durch ein- oder mehrere Sauerstoff- und/oder Schwefelatome und/oder ein oder mehrere substituierte oder unsubstituierte Iminogruppen und/oder durch eine oder mehrere Cycloalkyl-, -(CO)-, -O(CO)O-, -(NH)(CO)O-, -O(CO)(NH)-, -O(CO)- oder -(CO)O-Gruppen unterbrochenes C₂-C₂₀-Alkylen, wobei die genannten Reste jeweils durch Aryl, Alkyl, Aryloxy, Alkyloxy, Heteroatome und/oder Heterocyclen substituiert sein können,
bedeuten.

14. Verfahren gemäß einem der Ansprüche 1 bis 10, **dadurch gekennzeichnet, daß** die Verbindung (S) ausgewählt ist aus der Gruppe bestehend aus O-2-Hydroxyethylcarbamat und O-2-Hydroxypropylcarbamat.

## Claims

1. A process for preparing polyisocyanates (P) by catalytic oligomerization of isocyanates (D), which comprises the steps
a) reaction of at least one isocyanate (D) under suitable reaction conditions in the presence of at least one compound (K) which catalyzes the conversion of the isocyanate into the desired polyisocyanate and optionally in the presence of at least one alcohol (A) and optionally at least one solvent (L),
b) addition of at least one compound (S) which is able to deactivate the catalyst (K) used in step a) to the reaction mixture when the desired conversion has been reached in step a), and
c) separation of the unreacted isocyanate (D) from the resulting reaction mixture,
wherein the compound (S) has the formula 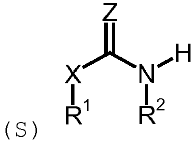 where
R¹ and R² are each, independently of one another, C₁ - C₂₀-alkyl, C₆ - C₁₂-aryl or C₅ - C₁₂-cycloalkyl which may optionally be substituted by aryl, alkyl, aryloxy, alkyloxy, heteroatoms and/or heterocycles, R² is additionally hydrogen
and
R¹ and R² may together with the group X-(CO)-NH also form a 5- to 12-membered ring in which R¹ and R² together form an optionally substituted divalent C₂ - C₉-alkylene radical which can also be part of an arylene or cycloalkylene radical,
Z is oxygen (O) or sulfur (S),
X is oxygen (O), sulfur (S), imino (NH) or substituted imino (NR³) and
R³ is C₁ - C₄-alkyl,
where the radical R¹ has at least one mercapto, amino, monosubstituted amino or hydroxyl group.

2. The process according to claim 1, wherein the diisocyanate (D) is selected from the group consisting of hexamethylene 1,6-diisocyanate, 1,3-bis(isocyanatomethyl)cyclohexane, isophorone diisocyanate, 4,4'- and 2,4'-di(isocyanatocyclohexyl)methane.

3. The process according to claim 1 or 2, wherein the diisocyanate (D) has a total content of hydrolyzable chlorine of less than 200 ppm.

4. The process according to claim 1 or 2, wherein the diisocyanate (D) has a total content of hydrolyzable chlorine of up to 500 ppm.

5. The process according to any of the preceding claims, wherein the polyisocyanate (P) is selected from the group consisting of isocyanurates, biurets, urethanes and allophanates.

6. The process according to any of the preceding claims, wherein the catalyst (K) is a quaternary ammonium salt of the formula 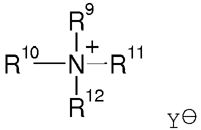 where
Y^{⊖}= carboxylate (R¹³COO⁻) , fluoride (F⁻) , carbonate (R¹³O (CO) O⁻) or hydroxide (OH⁻)
and R¹³ is hydrogen, C₁ - C₂₀-alkyl, C₆ - C₁₂-aryl or C₇ - C₂₀-arylalkyl, each of which may optionally be substituted.

7. The process according to claim 6, wherein the radicals R⁹ to R¹² are each, independently of one another, C₁ - C₄-alkyl and R¹² may additionally be benzyl or a radical of the formula 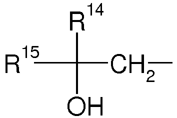 where R¹⁴ and R¹⁵ can each be, independently of one another, hydrogen or C₁ -C₄-alkyl.

8. The process according to claim 6, wherein the radicals R⁹ to R¹² are selected independently from the group consisting of methyl, ethyl and n-butyl and in the case of R¹² additionally benzyl, 2-hydroxyethyl and 2-hydroxypropyl.

9. The process according to any of the preceding claims, wherein the catalyst (K) is selected from the group consisting of N,N,N,N-tetramethylammonium hydroxide, N,N,N,N-tetraethylammonium hydroxide, N,N,N,N-tetra-n-butylammonium hydroxide, N,N,N-trimethyl-N-(2-hydroxyethyl)ammonium hydroxide, N,N,N-trimethyl-N-(2-hydroxypropyl)ammonium hydroxide, N,N,N-trimethyl-N-benzylammonium hydroxide, N-(2-hydroxypropyl)-N,N,N-trimethylammonium 2-ethylhexanoate and N-(2-hydroxypropyl)-N,N,N-trimethylammonium 2-formate.

10. The process according to any of claims 1 to 5, wherein the catalyst (K) is selected from the group consisting of hexamethyldisilazane, heptamethyldisilazane, hexaethyldisilazane, 1,3-diethyl-1,1,3,3-tetramethyldisilazane, 1,3-divinyl-1,1,3,3-tetramethyldisilazane and 1,3-diphenyl-1,1,3,3-tetramethyldisilazane and is in particular hexamethyldisilazane.

11. The process according to any of the preceding claims, wherein the compound (S) is selected from the group consisting of cyclic ureas (X=NH or NR³) 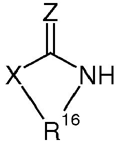 and oxazolidinones (X=O), 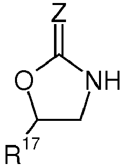 where
Z is oxygen (0) or sulfur (S),
R¹⁶ is a C₂-C₆-alkylene radical substituted by at least one mercapto, amino, monosubstituted amino or hydroxyl group and
R¹⁷ is a straight-chain or branched C₁-C₄-alkyl radical which is substituted by at least one mercapto, amino, monosubstituted amino or hydroxyl group,
with the proviso that the radical R¹⁷ has a mercapto, amino, monosubstituted amino or hydroxyl group or one of the radicals R³ or R¹⁶.

12. The process according to any of claims 1 to 10, wherein R¹ and R² in the compound (S) are selected independently from the group consisting of optionally substituted C₁ - C₄-alkyl, as long as at least one of these radicals has at least one mercapto, amino, monosubstituted amino or hydroxyl group, where R² can additionally be hydrogen.

13. The process according to any of claims 1 to 10, wherein the compound (S) is a compound which is obtainable by means of a reaction according to formula (III), 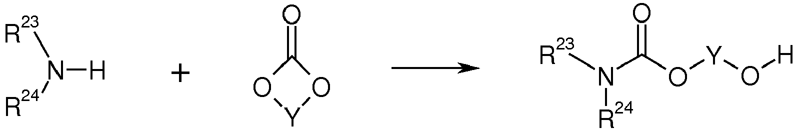 where
R²³ is hydrogen,
R²⁴ is hydrogen, C₁ - C₂₀-alkyl, C₂ - C₂₀-alkyl which may optionally be interrupted by one or more oxygen and/or sulfur atoms and/or one or more substituted or unsubstituted imino groups, C₂ - C₁₈-alkenyl,
C₆ - C₁₂-aryl, C₅-C₁₂-cycloalkyl or a five- to six-membered heterocycle having oxygen, nitrogen and/or sulfur atoms, where the radicals mentioned may each be substituted by aryl, alkyl, aryloxy, alkyloxy, heteroatoms and/or heterocycles,
Y is C₂-C₂₀-alkylene, C₅-C₁₂-cycloalkylene or C₂ - C₂₀-alkylene which may be interrupted by one or more oxygen and/or sulfur atoms and/or one or more substituted or unsubstituted imino groups and/or by one or more cycloalkyl, -(CO)-, -O(CO)O-, - (NH)(CO) O-, -O(CO)(NH)-, -O(CO)- or -(CO)O-groups, where the radicals mentioned may each be substituted by aryl, alkyl, aryloxy, alkyloxy, heteroatoms and/or heterocycles.

14. The process according to any of claims 1 to 10, wherein the compound (S) is selected from the group consisting of O-2-hydroxyethyl carbamate and O-2-hydroxypropyl carbamate.

## Revendications

1. Procédé de fabrication de polyisocyanates (P) par oligomérisation catalytique d'isocyanates (D), comprenant les étapes suivantes :
a) la mise en réaction d'au moins un isocyanate (D) en présence d'au moins un composé (K) catalysant la transformation de l'isocyanate en le polyisocyanate souhaité dans des conditions de réaction appropriées, éventuellement en présence d'au moins un alcool (A) et éventuellement d'au moins un solvant (L),
b) lorsque la conversion souhaitée est atteinte à l'étape a), l'ajout d'au moins un composé (S) au mélange réactionnel, qui peut désactiver le catalyseur (K) de l'étape a), et
c) la séparation de l'isocyanate non réagi (D) du mélange réactionnel ainsi obtenu,
selon lequel le composé (S) présente la formule 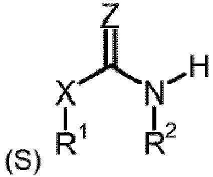 dans laquelle
R¹ et R² signifient indépendamment l'un de l'autre alkyle en C₁-C₂₀, aryle en C₆-C₁₂ ou cycloalkyle en C₅-C₁₂, qui peuvent éventuellement être substitués par aryle, alkyle, aryloxy, alkyloxy, des hétéroatomes et/ou des hétérocycles,
R² peut également signifier hydrogène
et
R¹ et R² peuvent également former ensemble avec le groupe X-(CO)-NH un cycle de 5 à 12 éléments, R¹ et R² formant ensemble un radical alkylène en C₂ à C₉ bivalent éventuellement substitué, qui peut également faire partie d'un radical arylène ou cycloalkylène,
Z signifie oxygène (O) ou soufre (S),
X signifie oxygène (O), soufre (S), imino (NH) ou imino substitué (NR³) et
R³ signifie alkyle en C₁ à C₄,
le radical R¹ comprenant au moins un groupe mercapto, amino, amino monosubstitué ou hydroxy.

2. Procédé selon la revendication 1, **caractérisé en ce que** le diisocyanate (D) est choisi dans le groupe constitué par le diisocyanate de 1,6-hexaméthylène, le 1,3-bis(isocyanatométhyl)cyclohexane, le diisocyanate d'isophorone, le 4,4'- et 2,4'-di(isocyanatocyclohexyl)méthane.

3. Procédé selon la revendication 1 ou 2, **caractérisé en ce que** le diisocyanate (D) présente une teneur totale en chlore hydrolysable de moins de 200 ppm.

4. Procédé selon la revendication 1 ou 2, **caractérisé en ce que** le diisocyanate (D) présente une teneur totale en chlore hydrolysable de jusqu'à 500 ppm.

5. Procédé selon l'une quelconque des revendications précédentes, **caractérisé en ce que** le polyisocyanate (P) est choisi dans le groupe constitué par les isocyanurates, les biurets, les uréthanes et les allophanates.

6. Procédé selon l'une quelconque des revendications précédentes, **caractérisé en ce que** le catalyseur (K) est un sel d'ammonium quaternaire de formule 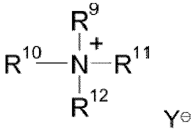 dans laquelle
Y^{⊖} = carboxylate (R¹³COO⁻), fluorure (F⁻), carbonate (R¹³O(CO)O⁻) ou hydroxyde (OH⁻),
R¹³ signifiant hydrogène, alkyle en C₁ à C₂₀, aryle en C₆ à C₁₂ ou arylalkyle en C₇ à C₂₀, qui peut à chaque fois éventuellement être substitué.

7. Procédé selon la revendication 6, **caractérisé en ce que** les radicaux R⁹ à R¹² signifient indépendamment les uns des autres alkyle en C₁ à C₄ et R¹² peut en outre signifier benzyle ou un radical de formule 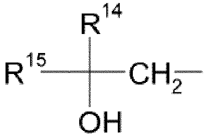 dans laquelle R¹⁴ et R¹⁵ peuvent signifier indépendamment l'un de l'autre hydrogène ou alkyle en C₁ à C₄.

8. Procédé selon la revendication 6, **caractérisé en ce que** les radicaux R⁹ à R¹² sont choisis indépendamment les uns des autres dans le groupe constitué par méthyle, éthyle et n-butyle, et R¹² en outre benzyle, 2-hydroxyéthyle et 2-hydroxypropyle.

9. Procédé selon l'une quelconque des revendications précédentes, **caractérisé en ce que** le catalyseur (K) est choisi dans le groupe constitué par l'hydroxyde de N,N,N,N-tétraméthylammonium, l'hydroxyde de N,N,N,N-tétraéthylammonium, l'hydroxyde de N,N,N,N-tétra-n-butylammonium, l'hydroxyde de N,N,N-triméthyl-N-(2-hydroxyéthyl)ammonium, l'hydroxyde de N,N,N-triméthyl-N-(2-hydroxypropyl)ammonium, l'hydroxyde de N,N,N-triméthyl-N-benzylammonium, le 2-éthylhexanoate de N-(2-hydroxypropyl)-N,N,N-triméthylammonium et le 2-formiate de N-(2-hydroxypropyl)-N,N,N-triméthylammonium.

10. Procédé selon l'une quelconque des revendications 1 à 5, **caractérisé en ce que** le catalyseur (K) est choisi dans le groupe constitué par l'hexaméthyldisilazane, l'heptaméthyldisilazane, l'hexaéthyldisilazane, le 1,3-diéthyl-1,1,3,3-tétraméthyldisilazane, le 1,3-divinyl-1,1,3,3-tétraméthyldisilazane et le 1,3-diphényl-1,1,3,3-tétraméthyldisilazane et notamment l'hexaméthyldisilazane.

11. Procédé selon l'une quelconque des revendications précédentes, **caractérisé en ce que** le composé (S) est choisi dans le groupe constitué par les urées cycliques (X = NH ou NR³) 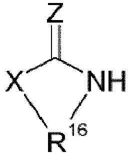 et les oxazolidinones (X = 0) 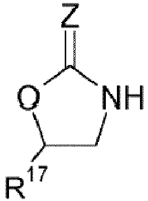 dans lesquelles
Z signifie oxygène (O) ou soufre (S),
R¹⁶ signifie un alkylène en C₂ à C₆ substitué avec au moins un groupe mercapto, amino, amino monosubstitué ou hydroxy, et
R¹⁷ signifie alkyle en C₁ à C₄ linéaire ou ramifié, qui est substitué avec au moins un groupe mercapto, amino, amino monosubstitué ou hydroxy,
à condition que le radical R¹⁷ comprenne un groupe mercapto, amino, amino monosubstitué ou hydroxy, ou un des radicaux R³ ou R¹⁶.

12. Procédé selon l'une quelconque des revendications 1 à 10, **caractérisé en ce que**, dans le composé (S), R¹ et R² sont choisis indépendamment l'un de l'autre dans le groupe constitué par alkyle en C₁ à C₄ éventuellement substitué, dans la mesure où au moins un de ces radicaux comprend au moins un groupe mercapto, amino, amino monosubstitué ou hydroxy, R² pouvant en outre signifier hydrogène.

13. Procédé selon l'une quelconque des revendications 1 à 10, **caractérisé en ce que** le composé (S) correspond à des composés qui peuvent être obtenus par une réaction selon la formule (III) 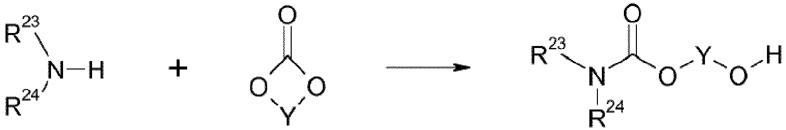 dans laquelle
R²³ signifie hydrogène,
R²⁴ signifie hydrogène, alkyle en C₁-C₂₀, alkyle en C₂-C₂₀ éventuellement interrompu par un ou plusieurs atomes d'oxygène et/ou de soufre et/ou un ou plusieurs groupes imino substitués ou non substitués ; alcényle en C₂-C₁₈, aryle en C₆-C₁₂, cycloalkyle en C₅-C₁₂ ou un hétérocycle de cinq à six éléments, comprenant des atomes d'oxygène, d'azote et/ou de soufre, les radicaux mentionnés pouvant chacun être substitués par aryle, alkyle, aryloxy, alkyloxy, des hétéroatomes et/ou des hétérocycles,
Y signifie alkylène en C₂-C₂₀, cycloalkylène en C₅-C₁₂ ou alkylène en C₂-C₂₀ interrompu par un ou plusieurs atomes d'oxygène et/ou de soufre et/ou un ou plusieurs groupes imino substitués ou non substitués et/ou par un ou plusieurs groupes cycloalkyle, -(CO)-, -O(CO)O-, - (NH) (CO)O-, -O(CO) (NH)-, -O(CO)- ou -(CO)O-, les radicaux mentionnés pouvant chacun être substitués par aryle, alkyle, aryloxy, alkyloxy, des hétéroatomes et/ou des hétérocycles.

14. Procédé selon l'une quelconque des revendications 1 à 10, **caractérisé en ce que** le composé (S) est choisi dans le groupe constitué par le carbamate d'O-2-hydroxyéthyle et le carbamate d'O-2-hydroxypropyle.
